(19) Europäisches Patentamt
European Patent Office
Office européen des brevets

(11) EP 3 993 104 A1

(12) EUROPEAN PATENT APPLICATION
published in accordance with Art. 153(4) EPC

(43) Date of publication:
**04.05.2022 Bulletin 2022/18**

(21) Application number: **20850288.0**

(22) Date of filing: **05.08.2020**

(51) International Patent Classification (IPC):
***H01M 4/36*** *(2006.01)*

(52) Cooperative Patent Classification (CPC):
**H01M 4/36;** Y02E 60/10

(86) International application number:
**PCT/JP2020/030072**

(87) International publication number:
**WO 2021/025079 (11.02.2021 Gazette 2021/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2019 JP 2019144895**

(71) Applicant: **Murata Manufacturing Co., Ltd.**
**Nagaokakyo-shi, Kyoto 617-8555 (JP)**

(72) Inventors:
- **KUBOTA, Hironobu**
  **Nagaokakyo-shi, Kyoto 617-8555 (JP)**
- **ENDOH, Kazuaki**
  **Nagaokakyo-shi, Kyoto 617-8555 (JP)**
- **HAYASHI, Takeshi**
  **Nagaokakyo-shi, Kyoto 617-8555 (JP)**
- **KASASHIMA, Takashi**
  **Nagaokakyo-shi, Kyoto 617-8555 (JP)**

(74) Representative: **Witte, Weller & Partner Patentanwälte mbB**
**Postfach 10 54 62**
**70047 Stuttgart (DE)**

# (54) POSITIVE ELECTRODE ACTIVE MATERIAL, POSITIVE ELECTRODE, AND SECONDARY BATTERY

(57) The present invention provides a positive electrode active material capable of more sufficiently preventing deterioration in cycle characteristics even when the positive electrode active material has a coating based on a metal alkoxide on its surface. The present invention relates to a positive electrode active material for a battery including a positive electrode active material core material and a coating formed on a surface of the positive electrode active material core material, wherein
the coating is an organic-inorganic hybrid coating formed of a reactant including at least a first metal alkoxide containing no metal atom-carbon atom bond in one molecule and a second metal alkoxide containing two or more metal atom-carbon atom bonds in one molecule.

FIG. 1

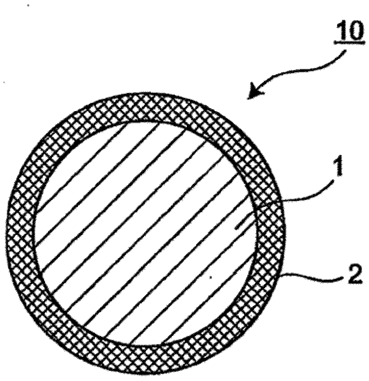


EP 3 993 104 A1

## Description

TECHNICAL FIELD

The present invention relates to a positive electrode active material, a positive electrode, and a secondary battery.

BACKGROUND ART

Secondary batteries have been conventionally used as power sources for various electronic devices. A secondary battery usually has a structure in which an electrode assembly (electrode body) and an electrolyte are housed in an exterior body (case), and further includes an external terminal (or electrode lead) for achieving electrical connection of the secondary battery. The electrode assembly has a structure in which a positive electrode and a negative electrode are disposed with a separator interposed therebetween.

The positive electrode has a positive electrode layer containing a positive electrode active material and the negative electrode has a negative electrode layer containing a negative electrode active material. In a secondary battery, ions are brought in an electrolyte due to the "positive electrode active material contained in the positive electrode layer" and the "negative electrode active material contained in the negative electrode layer", and such ions move between the positive electrode and the negative electrode to transfer electrons, whereby charging and discharging are performed. In recent years, lithium ion secondary batteries using lithium ions as the ions particularly have been attracting attention because of their large battery capacity.

A positive electrode used in a lithium ion secondary battery is produced as follows using lithium cobalt oxide or the like as a positive electrode active material. First, a positive electrode active material and a binder are mixed in a dispersion medium to prepare a positive electrode layer slurry. Next, the positive electrode layer slurry is applied to a positive electrode current collector such as an aluminum foil, and then dried to form a coating of the positive electrode active material. Then, the coating of the positive electrode active material is rolled with a rolling roll or the like to form a positive electrode layer. Finally, the positive electrode current collector carrying the positive electrode layer thus formed is cut into a predetermined shape to obtain a positive electrode. In the production of the positive electrode, the positive electrode layer coating is rolled in order to improve the fillability of the positive electrode active material from the viewpoint of increasing the battery capacity.

On the other hand, attempts have been made to improve various properties of a positive electrode by surface-treating a positive electrode active material using a metal alkoxide (for example, Patent Documents 1 to 4).

PRIOR ART DOCUMENT

PATENT DOCUMENTS

Patent Document 1: Japanese Patent Application Laid-Open No. 2012-199101
Patent Document 2: Japanese Patent Application Laid-Open No. 2012-169249
Patent Document 3: Japanese Patent Application Laid-Open No. 2011-49161
Patent Document 4: Japanese Patent Application Laid-Open No. 2013-191539

SUMMARY OF THE INVENTION

Problem to be solved by the invention

The inventors of the present invention have found that the technique for surface treatment of a positive electrode active material with a metal alkoxide in the conventional art has a problem in cycle characteristics as follows. In the conventional art, the coating based on the metal alkoxide formed on the surface of the positive electrode active material has not had sufficient flexibility and/or has not had sufficient close contact with the positive electrode active material. Therefore, the coating did not have sufficient strength, and relatively easily peeled off by repeated charging and discharging, and the cycle characteristics deteriorate. The peeling of the coating caused deterioration of the electrolyte (or electrolytic solution), leading to further deterioration in cycle characteristics.

The inventors of the present invention have also found that the following problems occur in the production of the positive electrode. When rolling was performed with an increased pressure from the viewpoint of further improving the fillability of the positive electrode active material in the positive electrode layer, the rate characteristics deteriorated

due to cracking along the grain boundary of the positive electrode active material. In addition, irregularities and breakage occurred in the current collector, and/or peeling of the positive electrode layer from the current collector occurred. Such problems caused further deterioration in cycle characteristics.

Accordingly, the inventors of the present invention have attempted to improve the fillability of the positive electrode active material by surface-treating the positive electrode active material using a metal alkoxide, and found that there is a new problem that battery characteristics such as load characteristics deteriorate in the resulting positive electrode. Specifically, although the fillability of the positive electrode active material more sufficiently improves, the ion conductivity (in particular, Li ion conductivity) of the surface of the positive electrode active material decreases, and a new problem arises that battery characteristics such as load characteristics deteriorate.

An object of the present invention is to provide a positive electrode active material capable of preventing deterioration in cycle characteristics more sufficiently even when the positive electrode active material has a coating based on a metal alkoxide on its surface. Hereinafter, the present invention for solving the object may be referred to as "present invention A".

Another object of the present invention is to provide a positive electrode active material that is sufficiently excellent in battery characteristics such as fillability and load characteristics not only capable of preventing deterioration in cycle characteristics more sufficiently even when the positive electrode active material has a coating based on a metal alkoxide on its surface. Hereinafter, the present invention for solving the object may be referred to as "present invention B".

The problem related to the cycle characteristics is a problem to be solved by the present invention.

Problems related to the fillability and battery characteristics (for example, load characteristics) are not problems that the present invention has to solve, and are problems that do not have to be solved, and are preferably solved.

Means for solving the problem

The present invention A relates to a positive electrode active material for a battery, including:

a positive electrode active material core material; and
a coating formed on a surface of the positive electrode active material core material, wherein
the coating is an organic-inorganic hybrid coating formed of a reactant including at least:

a first metal alkoxide containing no metal atom-carbon atom bond in one molecule; and
a second metal alkoxide containing two or more metal atom-carbon atom bonds in one molecule.

The present invention B relates to a positive electrode active material for a battery, including:

a positive electrode active material core material; and
a coating formed on a surface of the positive electrode active material core material, wherein
the coating is an organic-inorganic hybrid coating formed of a reactant including at least:

a first metal alkoxide containing no metal atom-carbon atom bond in one molecule;
a second metal alkoxide containing two or more metal atom-carbon atom bonds in one molecule; and
a third metal alkoxide containing one metal atom-carbon atom bond in one molecule.

In the present specification, unless otherwise specified, "present invention" includes the present invention A and the present invention B. The present invention A includes the present invention B.

Advantageous effect of the invention

The positive electrode active material of the present invention A can constitute a positive electrode capable of preventing deterioration in cycle characteristics more sufficiently even when the positive electrode active material has a coating based on a metal alkoxide on its surface.

The positive electrode active material of the present invention B can constitute a positive electrode that is more sufficiently excellent in battery properties such as fillability and load characteristics not only capable of preventing deterioration in cycle characteristics more sufficiently even when the positive electrode active material has a coating based on a metal alkoxide on its surface.

BRIEF EXPLANATION OF DRAWINGS

FIG. 1 is a schematic sectional view of a positive electrode active material according to the present invention (in particular, the present inventions A and B).

FIG. 2 is a schematic conceptual diagram showing a main bonding state of an interface between an organic-inorganic hybrid coating and a positive electrode active material core material in the positive electrode active material according to the present invention (in particular, the present inventions A and B).

FIG. 3 is a schematic conceptual diagram showing a main structure of the organic-inorganic hybrid coating in the positive electrode active material according to the present invention (in particular, the present inventions A and B).

FIG. 4 is a schematic conceptual view showing a main surface state of the organic-inorganic hybrid coating in the positive electrode active material according to the present invention (in particular, the present invention B).

FIG. 5 is a schematic conceptual view showing a main structure of a coating on a surface of a conventional positive electrode active material.

MODE FOR CARRYING OUT THE INVENTION

[Positive electrode active material]

A positive electrode active material 10 of the present invention has a positive electrode active material core material 1 and a coating 2 formed on the surface of the positive electrode active material core material 1 as shown in FIG. 1. FIG. 1 is a schematic sectional view of a positive electrode active material according to the present invention.

The positive electrode active material core material is a substance that contributes to occlusion and release of ions that move between the positive electrode and the negative electrode to transfer electrons, and is preferably a substance that contributes to occlusion and release of lithium ions from the viewpoint of increasing the battery capacity. From such a viewpoint, the positive electrode active material core material is preferably, for example, a lithium-containing composite oxide. More specifically, the positive electrode active material core material is preferably a lithium transition metal composite oxide containing lithium and at least one transition metal selected from the group consisting of cobalt, nickel, manganese, and iron. That is, in the positive electrode active material of the present invention, such a lithium transition metal composite oxide is preferably contained as the positive electrode active material core material. For example, the positive electrode active material core material may be lithium cobalt oxide, lithium nickel oxide, lithium manganese oxide, lithium iron phosphate, or a material obtained by replacing a part of a transition metal thereof with another metal. Such a positive electrode active material core material may be contained as a single species, or two or more species may be contained in combination. In a more preferred embodiment, the positive electrode active material core material contained in the positive electrode active material is lithium cobalt oxide.

The average primary particle diameter of the positive electrode active material core material is not particularly limited, and may be, for example, 1 $\mu$m or more and 50 $\mu$m or less, particularly 3 $\mu$m or more and 30 $\mu$m or less.

In the present specification, the average primary particle diameter is an average value calculated by observing the positive electrode active material core material with an optical microscope or an electron microscope and measuring lengths of 50 randomly selected particles. In a microscopic image, a line is drawn from an end portion to another end portion of each particle, and the distance between two points having the maximum length is defined as the particle diameter.

The coating 2 is an organic-inorganic hybrid coating, and is formed of a composite of an organic component and an inorganic component.

In the present invention, the coating 2 is formed of a reactant containing at least a first metal alkoxide and a second metal alkoxide as monomer components. The present invention like this corresponds to the present invention A. Specifically, in the present invention (in particular, the present invention A), the coating 2 is not formed by stacking a plurality of layers formed of each of the metal alkoxides, but has a network structure (single layer structure) formed of a reactant of a mixture of the metal alkoxides. Because the coating 2 of the present invention A has a moderately rough network structure, it has more sufficient flexibility. The coating 2 further has more sufficient close contact to the positive electrode active material core material 1. Therefore, it is considered that the coating 2 has more sufficient strength, and as a result, peeling of the coating is more sufficiently prevented when repeated charging and discharging is performed, and the cycle characteristics improves. When the coating does not contain at least one of the first metal alkoxide and the second metal alkoxide, the coating does not have sufficient flexibility and/or does not have sufficient close contact to the positive electrode active material core material. For this reason, the coating does not have sufficient strength, and relatively easily peels off due to repeated charging and discharging, and cycle characteristics deteriorate. The cycle characteristics are characteristics that can prevent a decrease in discharge capacity when repeated charging and discharging is performed.

In the present invention, because the coating 2 is formed of a reactant containing not only the first metal alkoxide and the second metal alkoxide but also at least a third metal alkoxide as a monomer component, an effect of improving the fillability and battery characteristics (for example, load characteristics) is further obtained. The present invention like

this corresponds to the invention B. In the present invention (in particular, the present invention B), specifically, the coating 2 is formed of a reactant containing at least a first metal alkoxide, a second metal alkoxide, and a third metal alkoxide as monomer components. In the present invention B, the first metal alkoxide and the second metal alkoxide are the same as the first metal alkoxide and the second metal alkoxide in the present invention A, respectively. Specifically, in the present invention B, the coating 2 is not formed by stacking a plurality of layers formed of each of the metal alkoxides, but has a network structure (single layer structure) formed of a reactant of a mixture of the metal alkoxides. In the present invention B, because the coating contains the first metal alkoxide and the second metal alkoxide, the same effect of improving cycle characteristics as in the present invention A is exhibited. In the present invention B, because the coating 2 further contains the third alkoxide, not only the coating 2 has a moderately rough network structure but also more sufficient slipperiness is imparted to the surface. Therefore, it is considered that the positive electrode active material of the present invention B has more sufficiently excellent fillability, and also has sufficiently improved ion conductivity when ions (in particular, lithium ions) responsible for electron transfer permeate the coating, and is sufficiently excellent in battery characteristics such as load characteristics. When the coating does not contain the third metal alkoxide, the fillability of the positive electrode active material decreases, and the volume density decreases. When the coating does not contain the second metal alkoxide, the mesh is relatively small in the network structure of the coating, and therefore ion conductivity decreases and load characteristics deteriorate. When the coating does not contain the first metal alkoxide, the coating is not sufficiently fixed to the surface of the positive electrode active material core material, and therefore the fillability of the positive electrode active material decreases and the volume density decreases.

The coating 2 usually has an average coating thickness of, for example, 0.1 nm or more and 20 nm or less (particularly 0.5 nm or more and 15 nm or less).

The first metal alkoxide is a metal alkoxide containing no metal atom-carbon atom bond in one molecule, and is a metal alkoxide in which all hands of the metal are bound to an alkoxy group ($-OR^1$). In the first metal alkoxide, the metal atom-carbon atom bond is a direct covalent bond between a metal atom and a carbon atom. In the first metal alkoxide, the carbon atom constituting the metal atom-carbon atom bond is a carbon atom constituting a monovalent hydrocarbon group (for example, an alkyl group or an alkenyl group.) or a carbon atom constituting a divalent hydrocarbon group (for example, an alkylene group). The first metal alkoxide does not have such a metal atom-carbon atom bond in one molecule. Therefore, the first metal alkoxide has relatively high reactivity, and mainly fixes the coating 2 to the positive electrode active material core material 1 by relatively strong bonding at the interface between the coating 2 and the positive electrode active material core material 1, as shown in FIG. 2. FIG. 2 is a schematic conceptual diagram showing a main bonding state of the interface between the organic-inorganic hybrid coating and the positive electrode active material core material in the positive electrode active material according to the present invention (in particular, the present inventions A and B).

The first metal alkoxide is specifically a compound represented by the following general formula (1).

[Chemical Formula 1]

$$M^1(OR^1)_x \qquad (1)$$

In the formula (1), $M^1$ is a metal atom and is Si, Ti, Al or Zr, and is preferably Si or Ti and more preferably Si from the viewpoint of further improving the cycle characteristics, fillability and load characteristics of the positive electrode active material.

x is the valence of $M^1$. When $M^1$ is Si, Ti or Zr, x is 4. When $M^1$ is Al, x is 3.

$R^1$s each independently are an alkyl group having 1 to 10 carbon atoms or a group represented by the general formula: $-C(R^2) = CH-CO-R^3$ (wherein $R^2$ and $R^3$ are as described below), and is preferably an alkyl group having 1 to 5 carbon atoms from the viewpoint of further improving the cycle characteristics, fillability, and load characteristics of the positive electrode active material. Examples of the alkyl group as $R^1$ include a methyl group, an ethyl group, n-propyl, an isopropyl group, a n-butyl group, an isobutyl group, a sec-butyl group, a tert-butyl group, a n-pentyl group, a n-hexyl group, a n-heptyl group, a n-octyl group, a n-nonyl group, and a n-decyl group. For a plurality of $R^1$s according to the number of x, all $R^1$s each independently may be selected from the above-described alkyl groups, or all $R^1$s may be mutually the same group selected from the above-described alkyl groups.

$R^2$ is an alkyl group having 1 to 10 carbon atoms, and is preferably an alkyl group having 1 to 5 carbon atoms from the viewpoint of further improving the cycle characteristics, fillability, and load characteristics of the positive electrode active material. Examples of the alkyl group as $R^2$ include the same alkyl groups as $R^1$.

$R^3$ is an alkyl group having 1 to 30 carbon atoms, an alkyloxy group having 1 to 30 carbon atoms, or an alkenyloxy group having 1 to 30 carbon atoms, and is preferably an alkyl group having 1 to 20 (more preferably 1 to 10, further preferably 1 to 5) carbon atoms, an alkyloxy group having 10 to 30 (particularly 14 to 24) carbon atoms, or an alkenyloxy group having 10 to 30 (particularly 14 to 24) carbon atoms from the viewpoint of further improving the cycle characteristics, fillability, and load characteristics of the positive electrode active material. Preferable examples of the alkyl group as $R^3$ include the same alkyl groups as $R^1$, and an undecyl group, a lauryl group, a tridecyl group, a myristyl

group, a pentadecyl group, a cetyl group, a heptadecyl group, a stearyl group, a nonadecyl group, and an eicosyl group. Examples of the alkyloxy group as $R^3$ include a group represented by the formula: $-O-C_pH_{2p+1}$ (wherein p is an integer of 1 to 30). Examples of the alkenyloxy group as $R^3$ include a group represented by the formula: $-O-C_qH_{2q-1}$ (wherein q is an integer of 1 to 30) .

In the formula (1), two adjacent $R^1$ among the plurality of $R^1$s may be bound to each other to form one ring (for example, a 5- to 8-membered ring, in particular a 6-membered ring) together with an oxygen atom to which the two $R^1$s are bound and an $M^1$ atom to which the oxygen atom is bound when the two $R^1$s are the alkyl groups. Examples of the one ring formed by bonding two adjacent $R^1$ to each other include a 6-membered ring represented by a general formula (1X).

[Chemical Formula 1X]

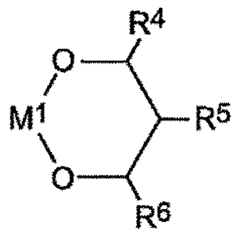

(1X)

In the formula (1X), $R^4$, $R^5$, and $R^6$ each independently are a hydrogen atom or an alkyl group having 1 to 10 carbon atoms, and are preferably a hydrogen atom or an alkyl group having 1 to 5 carbon atoms from the viewpoint of further improving the cycle characteristics, filling properties, and load characteristics of the positive electrode active material. The total number of carbon atoms of $R^4$, $R^5$, and $R^6$ is usually 0 to 12, and is preferably 2 to 8 from the viewpoint of further improving the cycle characteristics, fillability and load characteristics of the positive electrode active material. In the formula (1X), examples of the alkyl group as $R^4$, $R^5$, and $R^6$ include the same alkyl groups as $R^1$.

Examples of the first metal alkoxide include compounds represented by the following general formulas (1A), (1B), (1B'), (1C), and (1D) The first metal alkoxide is preferably a compound represented by the general formula (1A), (1B), (1C) or (1D) or a mixture thereof, more preferably a compound represented by the general formula (1A) or (1B) or a mixture thereof, and further preferably a compound represented by the general formula (1A) or a mixture thereof, from the viewpoint of further improving the cycle characteristics, fillability and load characteristics of the positive electrode active material.

[Chemical Formula 1A]

$Si(OR^1)_4$ (1A)

In the formula (1A), $R^1$s each independently are the same as $R^1$s in the formula (1). $R^1$s each independently are preferably an alkyl group having 1 to 10 carbon atoms, and more preferably an alkyl group having 1 to 5 carbon atoms from the viewpoint of further improving the cycle characteristics, fillability, and load characteristics of the positive electrode active material.

Specific examples of the compound (1A) represented by such a general formula are shown in the following table.

[Table 1A]

| Specific examples of compound (1A) | | | | |
|---|---|---|---|---|
| Compound | $R^1$ | $R^1$ | $R^1$ | $R^1$ |
| 1A-1 | Ethyl group | Ethyl group | Ethyl group | Ethyl group |
| 1A-2 | Methyl group | Methyl group | Methyl group | Methyl group |
| 1A-3 | Butyl group | Butyl group | Butyl group | Butyl group |
| 1A-4 | Isopropyl group | Isopropyl group | Isopropyl group | Isopropyl group |

[Chemical Formula 1B1]

$Ti(OR^1)_4$ (1B)

In the formula (1B), $R^1$s each independently are the same as $R^1$s in the formula (1). $R^1$s each independently are preferably an alkyl group having 1 to 10 carbon atoms or a group represented by the general formula: $-C(R^2) = CH-CO-R^3$ (wherein $R^2$ and $R^3$ are the same as $R^2$ and $R^3$ described in the general formula (1), respectively), and more preferably an alkyl group having 1 to 10 carbon atoms (particularly 1 to 5) from the viewpoint of further improving the cycle characteristics, fillability and load characteristics of the positive electrode active material.

In the formula (1B), $R^2$ and $R^3$ are each preferably the following group from the viewpoint of further improving the cycle characteristics, fillability, and load characteristics of the positive electrode active material. $R^2$ is an alkyl group having 1 to 10 carbon atoms, preferably an alkyl group having 1 to 5 carbon atoms. Examples of the alkyl group as $R^2$ include the same alkyl groups as $R^1$. $R^3$ is an alkyl group having 1 to 30 carbon atoms, and preferably an alkyl group having 1 to 20 (more preferably 1 to 10, further preferably 1 to 5) carbon atoms. Preferable examples of the alkyl group as $R^3$ include the same alkyl groups as $R^1$, and an undecyl group, a lauryl group, a tridecyl group, a myristyl group, a pentadecyl group, a cetyl group, a heptadecyl group, a stearyl group, a nonadecyl group, and an eicosyl group.

Specific examples of the compound (1B) represented by such a general formula are shown in the following table.

[Table 1B1]

| Specific examples of compound (1B) | | | | |
|---|---|---|---|---|
| Compound | $R^1$ | $R^1$ | $R^1$ | $R^1$ |
| 1B-1 | Butyl group | Butyl group | Butyl group | Butyl group |
| 1B-2 | Isopropyl group | Isopropyl group | Isopropyl group | Isopropyl group |
| 1B-3 | Ethyl group | Ethyl group | Ethyl group | Ethyl group |
| 1B-4 | Methyl group | Methyl group | Methyl group | Methyl group |
| 1B-5 | Isopropyl group | Isopropyl group | $-C(CH_3)=CH-CO-CH_3$ | $-C(CH_3)=CH-CO-CH_3$ |
| 1B-6 | Isopropyl group | Isopropyl group | $-C(CH_3)=CH-CO-C_2H_5$ | $-C(CH_3)=CH-CO-C_2H_5$ |
| 1B-7 | Butyl group | Butyl group | $-C(CH_3)-CH-CO-CH_3$ | $-C(CH_3)-CH-CO-CH_3$ |
| 1B-8 | Butyl group | Butyl group | $-C(CH_3)=CH-CO-C_2H_5$ | $-C(CH_3)=CH-CO-C_2H_5$ |
| 1B-9 | Ethyl group | Ethyl group | $-C(CH_3)-CH-CO-CH_3$ | $-C(CH_3)-CH-CO-CH_3$ |
| 1B-10 | Ethyl group | Ethyl group | $-C(CH_3)=CH-CO-C_2H_5$ | $-C(CH_3)=CH-CO-C_2H_5$ |
| 1B-11 | Methyl group | Methyl group | $-C(CH_3)-CH-CO-CH_3$ | $-C(CH_3)-CH-CO-CH_3$ |
| 1B-12 | Methyl group | Methyl group | $-C(CH_3)=CH-CO-C_2H_5$ | $-C(CH_3)=CH-CO-C_2H_5$ |

[Chemical Formula 1B2]

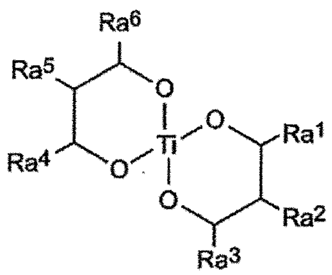

(1B')

In the formula (1B'), $Ra^1$, $Ra^2$, $Ra^3$, $Ra^4$, $Ra^5$, and $Ra^6$ each independently are a hydrogen atom or an alkyl group having 1 to 10 carbon atoms, and are preferably each independently an alkyl group having 1 to 5 carbon atoms from the viewpoint of further improving the cycle characteristics, fillability, and load characteristics of the positive electrode active material. Examples of the alkyl group as $Ra^1$, $Ra^2$, $Ra^3$, $Ra^4$, $Ra^5$, and $Ra^6$ are the same as the examples of the

alkyl group as $R^1$.

Specific examples of the compound (1B') represented by such a general formula are shown in the following table.

[Table 1B2]

| Specific examples of compound (1B') | | | | | | |
|---|---|---|---|---|---|---|
| Compound | $Ra^1$ | $Ra^2$ | $Ra^3$ | $Ra^4$ | $Ra^5$ | $Ra^6$ |
| 1B'-1 | n-Propyl group | Ethyl group | Hydrogen atom | n-Propyl group | Ethyl group | Hydrogen atom |

[Chemical Formula 1C]

$Al(OR^1)_3$ (1C)

In the formula (1C), $R^1$s each independently are the same as $R^1$s in the formula (1). $R^1$s each independently are preferably an alkyl group having 1 to 10 carbon atoms or a group represented by the general formula: $-C(R^2) = CH-CO-R^3$ (wherein $R^2$ and $R^3$ are the same as $R^2$ and $R^3$ described in the general formula (1), respectively), and more preferably an alkyl group having 1 to 10 (particularly 1 to 5) carbon atoms from the viewpoint of further improving the fillability and load characteristics of the positive electrode active material cycle characteristics.

In the formula (1C), $R^2$ and $R^3$ are each preferably the following group from the viewpoint of further improving the cycle characteristics, fillability, and load characteristics of the positive electrode active material. $R^2$ is an alkyl group having 1 to 10 carbon atoms, preferably an alkyl group having 1 to 5 carbon atoms. Examples of the alkyl group as $R^2$ include the same alkyl groups as $R^1$. $R^3$ is an alkyloxy group having 1 to 30 carbon atoms or an alkenyloxy group having 1 to 30 carbon atoms, and is preferably an alkyloxy group having 10 to 30 (particularly 14 to 24) carbon atoms or an alkenyloxy group having 10 to 30 (particularly 14 to 24) carbon atoms. Examples of the alkyloxy group as $R^3$ include a group represented by the formula: $-O-C_pH_{2p+1}$ (wherein p is an integer of 1 to 30). Examples of the alkenyloxy group as $R^3$ include a group represented by the formula: $-O-C_qH_{2q-1}$ (wherein q is an integer of 1 to 30).

Specific examples of the compound (1C) represented by such a general formula are shown in the following table.

[Table 1C]

| Specific examples of compound (1C) | | | |
|---|---|---|---|
| Compound | $R^1$ | $R^1$ | $R^1$ |
| 1C-1 | Isopropyl group | Isopropyl group | Isopropyl group |
| 1C-2 | Sec-butyl group | Sec-butyl group | Sec-butyl group |
| 1C-3 | Ethyl group | Ethyl group | Ethyl group |
| 1C-4 | Methyl group | Methyl group | Methyl group |
| 1C-5 | Isopropyl group | Isopropyl group | $-C(CH_3)=CH-CQ-C_{18}H_{35}$ |
| 1C-6 | Isopropyl group | Isopropyl group | $-C(CH_3)-CH-CO-C_{18}H_{37}$ |
| 1C-7 | Sec-butyl group | Sec-butyl group | $-C(CH_3)=CH-CQ-C_{18}H_{35}$ |
| 1C-8 | Sec-butyl group | Sec-butyl group | $-C(CH_3)-CH-CO-C_{18}H_{37}$ |
| 1C-9 | Ethyl group | Ethyl group | $-C(CH_3)=CH-CQ-C_{18}H_{35}$ |
| 1C-10 | Ethyl group | Ethyl group | $-C(CH_3)=CH-CO-C_{18}H_{37}$ |
| 1C-11 | Methyl group | Methyl group | $-C(CH_3)=CH-CQ-C_{18}H_{35}$ |
| 1C-12 | Methyl group | Methyl group | $-C(CH_3)=CH-CO-C_{18}H_{37}$ |

[Chemical Formula 1D]

$Zr(OR^1)_4$ (1D)

In the formula (1D), $R^1$s each independently are the same as $R^1$s in the formula (1). $R^1$s each independently are preferably an alkyl group having 1 to 10 carbon atoms, and more preferably an alkyl group having 1 to 5 carbon

atoms from the viewpoint of further improving the cycle characteristics, fillability, and load characteristics of the positive electrode active material.

Specific examples of the compound (1D) represented by such a general formula are shown in the following table.

[Table 1D]

| Specific examples of compound (1D) | | | | |
|---|---|---|---|---|
| Compound | $R^1$ | $R^1$ | $R^1$ | $R^1$ |
| 1D-1 | Isopropyl group | Isopropyl group | Isopropyl group | Isopropyl group |
| 1D-2 | Butyl group | Butyl group | Butyl group | Butyl group |
| 1D-3 | Ethyl group | Ethyl group | Ethyl group | Ethyl group |
| 1D-4 | Methyl group | Methyl group | Methyl group | Methyl group |

The compound (1) represented by the general formula (1) can be obtained as a commercially available product, or can be produced by a known method.

For example, the compound (1A) can be obtained as a commercially available tetraethyl orthosilicate (manufactured by Tokyo Chemical Industry Co., Ltd.).

For example, the compound (1B) can be obtained as commercially available tetrabutyl orthotitanate (manufactured by Tokyo Chemical Industry Co., Ltd.) or T-50 (manufactured by Nippon Soda Co., Ltd.).

For example, the compound (1B') can be obtained as commercially available TOG (manufactured by Nippon Soda Co., Ltd.).

For example, the compound (1C) can be obtained as commercially available aluminum triisopropoxide (manufactured by KANTO CHEMICAL CO., INC.).

For example, the compound (1D) can be obtained as commercially available zirconium(IV) tetrabutoxide (product name: TBZR, manufactured by Nippon Soda Co., Ltd.) or ZR-181 (manufactured by Nippon Soda Co., Ltd.).

The content of the first metal alkoxide in the coating 2 (that is, the reactant constituting the coating) is usually 5 wt% or more and 85 wt% or less with respect to the total weight thereof (for example, the total weight of the first metal alkoxide, the second metal alkoxide, and the third metal alkoxide), and the content is preferably 5 wt% or more and 70 wt% or less, more preferably 5 wt% or more and 60 wt% or less, and further preferably 5 wt% or more and 55 wt% or less from the viewpoint of further improving the cycle characteristics, the fillability, and the load characteristics of the positive electrode active material. The coating may contain two or more kinds of first metal alkoxides, and in that case, the total amount thereof may be within the above range. The content of the first metal alkoxide in the coating 2 may be a proportion of the blending amount of the first metal alkoxide to the total blending amount of the first metal alkoxide, the second metal alkoxide, and the third metal alkoxide.

The second metal alkoxide is a metal alkoxide containing two or more (for example, 2 or more and 20 or less, particularly 2 or more and 12 or less) metal atom-carbon atom bonds in one molecule. In the second metal alkoxide, the carbon atom constituting two or more metal atom-carbon atom bonds is a carbon atom constituting a monovalent hydrocarbon group (for example, an alkyl group or an alkenyl group) and/or a carbon atom constituting a divalent hydrocarbon group (for example, an alkylene group). In the second metal alkoxide, the carbon atoms constituting all of two or more metal atom-carbon atom bonds are preferably carbon atoms constituting a divalent hydrocarbon group (for example, an alkylene group) from the viewpoint of further improving the cycle characteristics, fillability, and load characteristics of the positive electrode active material. The metal atom of the second metal alkoxide is silicon. The second metal alkoxide contains two or more such metal atom-carbon atom bonds in one molecule. Therefore, the second metal alkoxide prevents formation of a dense network structure, and forms the coating 2 with a moderately rough network structure having flexibility. Specifically, for example, when the carbon atom constituting the metal atom-carbon atom bond is a carbon atom constituting a divalent hydrocarbon group (for example, an alkylene group) in the second metal alkoxide, the "flexibility" and "moderately rough" of the coating 2 are considered to be based on a divalent hydrocarbon group 30 of the second metal alkoxide as shown in FIG. 3. For example, in the second metal alkoxide, when a carbon atom constituting a metal atom-carbon atom bond is a carbon atom constituting a monovalent hydrocarbon group (for example, an alkyl group or an alkenyl group), the second metal alkoxide promotes formation of a metal atom-oxygen atom skeleton (for example, a polysiloxane skeleton) end, and therefore it is considered that the "moderately rough" of the coating 2 is based on the monovalent hydrocarbon group of the second metal alkoxide. As a result, it is considered that in the positive electrode active material of the present invention, ion conductivity when ions (in particular, lithium ions) responsible for electron transfer permeate the coating sufficiently improves. When the coating does not contain the second metal alkoxide, for example as shown in FIG. 5, the coating has a relatively dense network structure, and

cycle characteristics and ion conductivity deteriorate. FIG. 3 is an example of a schematic conceptual diagram showing a main structure of the organic-inorganic hybrid coating in the positive electrode active material according to the present invention (in particular, the present inventions A and B). FIG. 3 is a schematic conceptual diagram showing a main structure of the organic-inorganic hybrid coating particularly when 1,2-bis(triethoxysilyl)ethane (BTESE) is used as the second metal alkoxide. FIG. 5 is a schematic conceptual diagram showing a main structure of a coating on a surface of a conventional positive electrode active material.

When the carbon atom constituting the metal atom-carbon atom bond in the second metal alkoxide is a carbon atom constituting a divalent hydrocarbon group, the second metal alkoxide is a compound having two or more trialkoxysilyl groups represented by the following general formula (2) in one molecule.

[Chemical Formula 2]

$$-Si(OR^{21})_3 \qquad (2)$$

In the formula (2), $R^{21}$s each independently are an alkyl group having 1 to 10 carbon atoms, preferably an alkyl group having 1 to 5 carbon atoms, and more preferably an alkyl group having 1 to 3 carbon atoms from the viewpoint of further improving the cycle characteristics, fillability, and load characteristics of the positive electrode active material. Examples of such an alkyl group include a methyl group, an ethyl group, n-propyl, an isopropyl group, a n-butyl group, an isobutyl group, a sec-butyl group, a tert-butyl group, a n-pentyl group, a n-hexyl group, a n-heptyl group, a n-octyl group, a n-nonyl group, and a n-decyl group. For a plurality of $R^{21}$s, all $R^{21}$s each independently may be selected from the above-described alkyl groups, or all $R^{21}$s may be mutually the same group selected from the above-described alkyl groups.

The trialkoxysilyl groups of the second metal alkoxide each independently may be selected from the trialkoxysilyl groups of the general formula (2), or may be mutually the same group.

Specific examples of the trialkoxysilyl group represented by the general formula (2) are shown in the following table.

[Table 2]

| Specific examples of group of general formula (2) | | | |
|---|---|---|---|
| Group | $R^{21}$ | $R^{21}$ | $R^{21}$ |
| 2A-1 | Methyl group | Methyl group | Methyl group |
| 2A-2 | Ethyl group | Ethyl group | Ethyl group |
| 2A-3 | Isopropyl group | Isopropyl group | Isopropyl group |
| 2A-4 | Butyl group | Butyl group | Butyl group |

When all carbon atoms constituting two or more metal atom-carbon atom bonds in the second metal alkoxide are carbon atoms constituting a divalent hydrocarbon group, the second metal alkoxide may be, for example, a compound represented by the following general formula (2A), (2B), (2C), (2E) or (2F) or a mixture thereof. Among them, the second metal alkoxide is preferably a compound represented by the general formula (2A), (2B) or (2C) or a mixture thereof, more preferably a compound represented by the general formula (2A) or (2B) or a mixture thereof, and further preferably a compound represented by the general formula (2A) from the viewpoint of further improving the cycle characteristics, fillability, and load characteristics of the positive electrode active material.

When all carbon atoms constituting two or more metal atom-carbon atom bonds in the second metal alkoxide are carbon atoms constituting a monovalent hydrocarbon group, the second metal alkoxide may be, for example, a compound represented by the following general formula (2D) or a mixture thereof.

[Chemical Formula 2A]

$$(R^{211}O)_3Si\text{-}R^{31}\text{-}Si(OR^{212})_3 \qquad (2\ A)$$

In the formula (2A), $R^{211}$s and $R^{212}$s each independently are the same groups as $R^{21}$ in the formula (2). Specifically, three $R^{211}$s and three $R^{212}$s each independently are an alkyl group having 1 to 10 carbon atoms, preferably an alkyl group having 1 to 5 carbon atoms, and more preferably an alkyl group having 1 to 3 carbon atoms from the viewpoint of further improving the cycle characteristics, fillability, and load characteristics of the positive electrode active material. Three $R^{211}$s and three $R^{212}$s each independently may be selected from $R^{21}$ of the general formula (2), or may be mutually the same group.

$R^{31}$ is a divalent hydrocarbon group having 1 to 20 carbon atoms, and is preferably a divalent hydrocarbon group having 1 to 10 carbon atoms, and more preferably a divalent hydrocarbon group having 2 to 8 carbon atoms from the viewpoint of further improving the cycle characteristics, fillability, and load characteristics of the positive electrode active material. The divalent hydrocarbon group as $R^{31}$ may be a divalent saturated aliphatic hydrocarbon group (for example, an alkylene group) or a divalent unsaturated aliphatic hydrocarbon group (for example, an alkenylene group). The divalent hydrocarbon group as $R^{31}$ is preferably a divalent saturated aliphatic hydrocarbon group (in particular, an alkylene group) from the viewpoint of further improving the cycle characteristics, fillability, and load characteristics of the positive electrode active material. Examples of the divalent saturated aliphatic hydrocarbon group (in particular, an alkylene group) as $R^{31}$ include a group represented by $-(CH_2)_p-$ (wherein p is an integer of 1 to 10, more preferably 2 to 8).

Specific examples of the compound (2A) represented by such a general formula are shown in the following table.

[Table 2A]

| Specific examples of compound (2A) | | | | | | | |
|---|---|---|---|---|---|---|---|
| Compound | R211 | R211 | R211 | R31 | R212 | R212 | R212 |
| 2A-1 | Methyl group | Methyl group | Methyl group | $-CH_2CH_2-$ | Methyl group | Methyl group | Methyl group |
| 2A-2 | Methyl group | Methyl group | Methyl group | $-CH_2CH_2CH_2CH_2CH_2CH_2-$ | Methyl group | Methyl group | Methyl group |
| 2A-3 | Ethyl group | Ethyl group | Ethyl group | $-CH_2CH_2-$ | Ethyl group | Ethyl group | Ethyl group |
| 2A-4 | Ethyl group | Ethyl group | Ethyl group | $-CH_2CH_2CH_2CH_2CH_2CH_2-$ | Ethyl group | Ethyl group | Ethyl group |

[Chemical Formula 2B]

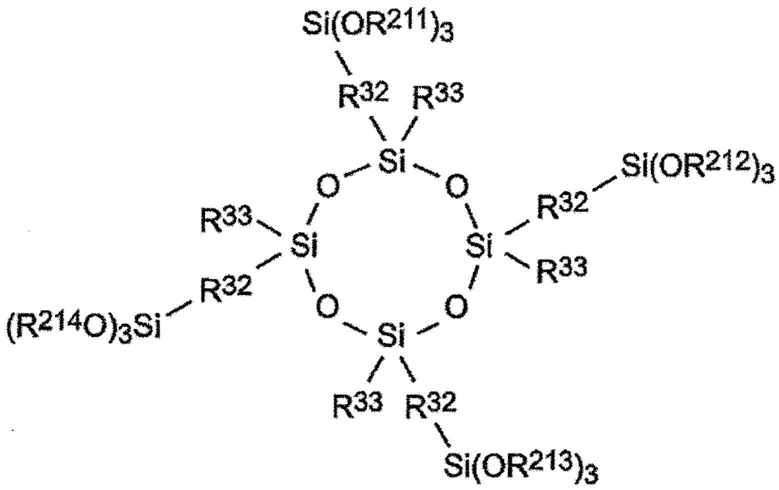

(2B)

In the formula (2B), $R^{211}$s, $R^{212}$s, $R^{213}$s, and $R^{214}$s are the same groups as $R^{21}$ in the formula (2). Specifically, three $R^{211}$s, three $R^{212}$s, three $R^{213}$s, and three $R^{214}$s each independently are an alkyl group having 1 to 10 carbon atoms, preferably an alkyl group having 1 to 5 carbon atoms, and more preferably an alkyl group having 1 to 3 carbon atoms from the viewpoint of further improving the cycle characteristics, fillability, and load characteristics of the positive electrode active material. Three $R^{211}$s, three $R^{212}$s, three $R^{213}$s, and three $R^{214}$s each independently may be selected from $R^{21}$ of the general formula (2), or may be mutually the same group.

$R^{32}$s each independently are a divalent hydrocarbon group having 1 to 20 carbon atoms, preferably a divalent hydrocarbon group having 1 to 10 carbon atoms, and more preferably a divalent hydrocarbon group having 6 to 10 carbon atoms, from the viewpoint of further improving the cycle characteristics, fillability, and load characteristics of the positive electrode active material. The divalent hydrocarbon group as $R^{32}$ may be a divalent saturated aliphatic hydrocarbon group (for example, an alkylene group) or a divalent unsaturated aliphatic hydrocarbon group (for example, an

alkenylene group). The divalent hydrocarbon group as $R^{32}$ is preferably a divalent saturated aliphatic hydrocarbon group (in particular, an alkylene group) from the viewpoint of further improving the cycle characteristics, fillability, and load characteristics of the positive electrode active material. Examples of the divalent saturated aliphatic hydrocarbon group (in particular, an alkylene group) as $R^{32}$ include a group represented by $-(CH_2)_q-$ (wherein q is an integer of 1 to 10, more preferably an integer of 6 to 10). All $R^{32}$s each independently may be selected from these $R^{32}$, or may be mutually the same group.

$R^{33}$s each independently are a monovalent hydrocarbon group having 1 to 10 carbon atoms, preferably a monovalent hydrocarbon group having 1 to 5 carbon atoms, and more preferably a monovalent hydrocarbon group having 1 to 3 carbon atoms from the viewpoint of further improving the cycle characteristics, fillability, and load characteristics of the positive electrode active material. The monovalent hydrocarbon group as $R^{33}$ may be a saturated aliphatic hydrocarbon group (for example, an alkyl group) or an unsaturated aliphatic hydrocarbon group (for example, an alkenyl group). The monovalent hydrocarbon group as $R^{33}$ is preferably a saturated aliphatic hydrocarbon group (in particular, an alkyl group) from the viewpoint of further improving the cycle characteristics, fillability, and load characteristics of the positive electrode active material. Examples of the monovalent saturated aliphatic hydrocarbon group (in particular, an alkyl group) as $R^{33}$ include a methyl group, an ethyl group, n-propyl, an isopropyl group, a n-butyl group, an isobutyl group, a sec-butyl group, a tert-butyl group, a n-pentyl group, a n-hexyl group, a n-heptyl group, a n-octyl group, a n-nonyl group, and a n-decyl group. All $R^{33}$s each independently may be selected from these $R^{33}$, or may be mutually the same group.

Specific examples of the compound (2B) represented by such a general formula are shown in the following table.

[Table 2B]

| Specific examples of compound (2B) | | | |
|---|---|---|---|
| Compound | Three $R^{211}$, three $R^{212}$, three $R^{213}$, three $R^{214}$ | Four $R^{32}$ | Four $R^{33}$ |
| 2B-1 | Methyl group | $-CH_2CH_2CH_2CH_2CH_2CH_2CH_2CH_2-$ | Methyl group |
| 2B-2 | Ethyl group | $-CH_2CH_2CH_2CH_2CH_2CH_2CH_2CH_2-$ | Ethyl group |

[Chemical Formula 2C]

$$(R^{211}O)_3Si-R^{34}-NH-R^{35}-NH-R^{36}-Si(OR^{212})_3 \qquad (2C)$$

In the formula (2C), $R^{211}$s and $R^{212}$s are the same groups as $R^{21}$ in the formula (2). Specifically, three $R^{211}$s and three $R^{212}$s each independently are an alkyl group having 1 to 10 carbon atoms, preferably an alkyl group having 1 to 5 carbon atoms, and more preferably an alkyl group having 1 to 3 carbon atoms from the viewpoint of further improving the cycle characteristics, fillability, and load characteristics of the positive electrode active material. Three $R^{211}$s and three $R^{212}$s each independently may be selected from $R^{21}$ of the general formula (2), or may be mutually the same group.

$R^{34}$, $R^{35}$, and $R^{36}$ each independently are a divalent hydrocarbon group having 1 to 10 carbon atoms, and preferably a divalent hydrocarbon group having 1 to 5 carbon atoms from the viewpoint of further improving the cycle characteristics, fillability, and load characteristics of the positive electrode active material. The divalent hydrocarbon group as $R^{34}$, $R^{35}$, and $R^{36}$ may be a divalent saturated aliphatic hydrocarbon group (for example, an alkylene group), or may be a divalent unsaturated aliphatic hydrocarbon group (for example, an alkenylene group). The divalent hydrocarbon group as $R^{34}$, $R^{35}$, or $R^{36}$ is preferably a divalent saturated aliphatic hydrocarbon group (in particular, an alkylene group) from the viewpoint of further improving the cycle characteristics, fillability, and load characteristics of the positive electrode active material. Examples of the divalent saturated aliphatic hydrocarbon group (in particular, an alkylene group) as $R^{34}$, $R^{35}$, or $R^{36}$ include a group represented by $-(CH_2)_r-$ (wherein r is an integer of 1 to 10, more preferably an integer of 1 to 5). All of $R^{34}$, $R^{35}$, and $R^{36}$ each independently may be selected from the divalent hydrocarbon groups described above, or may be mutually the same group. The total number of carbon atoms of $R^{34}$, $R^{35}$, and $R^{36}$ is preferably 3 to 20, and more preferably 6 to 10, from the viewpoint of further improving the cycle characteristics, fillability, and load characteristics of the positive electrode active material.

Specific examples of the compound (2C) represented by such a general formula are shown in the following table.

[Table 2C]

| Specific examples of compound (2C) | | | | |
|---|---|---|---|---|
| Compound | Three $R^{211}$, three $R^{212}$ | $R^{34}$ | $R^{35}$ | $R^{36}$ |
| 2C-1 | Methyl group | $-CH_2CH_2CH_2-$ | $-CH_2CH_2-$ | $-CH_2CH_2CH_2-$ |
| 2C-2 | Ethyl group | $-CH_2CH_2CH_2-$ | $-CH_2CH_2-$ | $-CH_2CH_2CH_2-$ |

[Chemical Formula 2D]

$$(R^{211})_2\text{-}Si(OR^{212})_2 \qquad (2D)$$

In the formula (2D), $R^{211}$s and $R^{212}$s each independently are the same group as $R^{21}$ in the formula (2). Specifically, two $R^{211}$s and two $R^{212}$s each independently are an alkyl group having 1 to 10 carbon atoms, preferably an alkyl group having 1 to 5 carbon atoms, and more preferably an alkyl group having 1 to 3 carbon atoms from the viewpoint of further improving the cycle characteristics, fillability, and load characteristics of the positive electrode active material. Two $R^{211}$s and two $R^{212}$s each independently may be selected from $R^{21}$ of the general formula (2), or may be mutually the same group.

Specific examples of the compound (2D) represented by such a general formula are shown in the following table.

[Table 2D]

| Specific examples of compound (2D) | | |
|---|---|---|
| Compound | Two $R^{211}$ | Two $R^{212}$ |
| 2D-1 | Methyl group | Methyl group |
| 2D-2 | Methyl group | Ethyl group |

[Chemical Formula 2E]

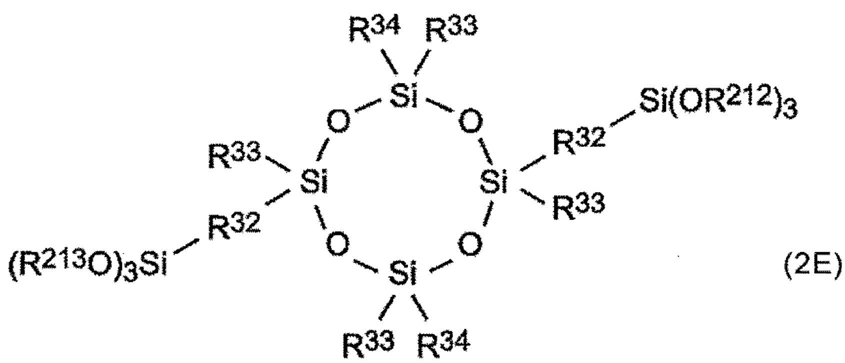

(2E)

In the formula (2E), $R^{212}$s and $R^{213}$s are the same groups as $R^{21}$ in the formula (2). Specifically, three $R^{212}$s and three $R^{213}$s each independently are an alkyl group having 1 to 10 carbon atoms, preferably an alkyl group having 1 to 5 carbon atoms, and more preferably an alkyl group having 1 to 3 carbon atoms from the viewpoint of further improving the cycle characteristics, fillability, and load characteristics of the positive electrode active material. Three $R^{212}$s and three $R^{213}$s each independently may be selected from $R^{21}$ of the general formula (2), or may be mutually the same group.

$R^{32}$s each independently are a divalent hydrocarbon group having 1 to 20 carbon atoms, preferably a divalent hydrocarbon group having 1 to 10 carbon atoms, and more preferably a divalent hydrocarbon group having 4 to 8 carbon atoms from the viewpoint of further improving the cycle characteristics, fillability, and load characteristics of the positive electrode active material. The divalent hydrocarbon group as $R^{32}$ may be a divalent saturated aliphatic hydrocarbon group (for example, an alkylene group) or a divalent unsaturated aliphatic hydrocarbon group (for example, an alkenylene group). The divalent hydrocarbon group as $R^{32}$ is preferably a divalent saturated aliphatic hydrocarbon group (in particular, an alkylene group) from the viewpoint of further improving the cycle characteristics, fillability, and load characteristics

of the positive electrode active material. Examples of the divalent saturated aliphatic hydrocarbon group (in particular, an alkylene group) as $R^{32}$ include a group represented by $-(CH_2)_q-$ (wherein q is an integer of 1 to 20, preferably an integer of 1 to 10, more preferably an integer of 4 to 8). All $R^{32}$s each independently may be selected from these $R^{32}$, or may be mutually the same group.

$R^{33}$s each independently are a monovalent hydrocarbon group having 1 to 10 carbon atoms, preferably a monovalent hydrocarbon group having 1 to 5 carbon atoms, and more preferably a monovalent hydrocarbon group having 1 to 3 carbon atoms from the viewpoint of further improving the cycle characteristics, fillability, and load characteristics of the positive electrode active material. The monovalent hydrocarbon group as $R^{33}$ may be a saturated aliphatic hydrocarbon group (for example, an alkyl group) or an unsaturated aliphatic hydrocarbon group (for example, an alkenyl group). The monovalent hydrocarbon group as $R^{33}$ is preferably a saturated aliphatic hydrocarbon group (in particular, an alkyl group) from the viewpoint of further improving the cycle characteristics, fillability, and load characteristics of the positive electrode active material. Examples of the monovalent saturated aliphatic hydrocarbon group (in particular, an alkyl group) as $R^{33}$ include a methyl group, an ethyl group, n-propyl, an isopropyl group, a n-butyl group, an isobutyl group, a sec-butyl group, a tert-butyl group, a n-pentyl group, a n-hexyl group, a n-heptyl group, a n-octyl group, a n-nonyl group, and a n-decyl group. All $R^{33}$s each independently may be selected from these $R^{33}$, or may be mutually the same group.

$R^{34}$s each independently are a monovalent hydrocarbon group having 1 to 30 carbon atoms, preferably a monovalent hydrocarbon group having 1 to 10 carbon atoms, and more preferably a monovalent hydrocarbon group having 1 to 5 carbon atoms, from the viewpoint of further improving the cycle characteristics, fillability, and load characteristics of the positive electrode active material. The monovalent hydrocarbon group as $R^{34}$ may be a saturated aliphatic hydrocarbon group (for example, an alkyl group) or an unsaturated aliphatic hydrocarbon group (for example, an alkenyl group). The monovalent hydrocarbon group as $R^{34}$ is preferably a saturated aliphatic hydrocarbon group (in particular, an alkyl group) from the viewpoint of further improving the cycle characteristics, fillability, and load characteristics of the positive electrode active material. Examples of the monovalent saturated aliphatic hydrocarbon group (in particular, an alkyl group) as $R^{34}$ include a methyl group, an ethyl group, -propyl, an isopropyl group, a n-butyl group, an isobutyl group, a sec-butyl group, a tert-butyl group, a n-pentyl group, a n-hexyl group, a n-heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an eicosyl group. All $R^{34}$s each independently may be selected from these $R^{34}$, or may be mutually the same group.

Specific examples of the compound (2E) represented by such a general formula are shown in the following table.

[Table 2E]

| Specific examples of compound (2E) | | | | |
|---|---|---|---|---|
| Compound | Three $R^{212}$, three $R^{213}$ | Two $R^{32}$ | Four $R^{33}$ | Two $R^{34}$ |
| 2E-1 | Methyl group | $-CH_2CH_2CH_2CH_2CH_2CH_2-$ | Methyl group | Ethyl group |
| 2E-2 | Ethyl group | $-CH_2CH_2CH_2CH_2CH_2CH_2-$ | Methyl group | Ethyl group |

[Chemical Formula 2F]

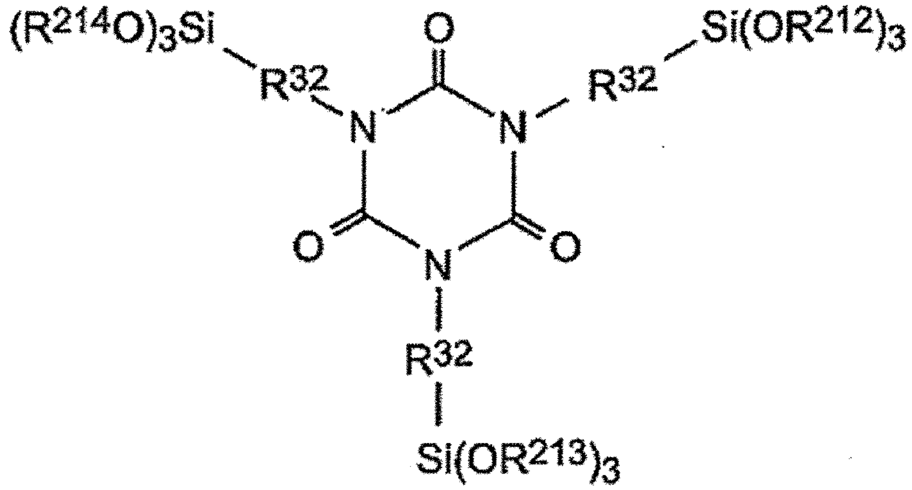

(2F)

In the formula (2F), $R^{212}$s, $R^{213}$s and $R^{214}$s each independently are the same groups as $R^{21}$ in the formula (2). Specifically, three $R^{212}$s, three $R^{213}$s, and three $R^{214}$s each independently are an alkyl group having 1 to 10 carbon atoms, preferably an alkyl group having 1 to 5 carbon atoms, and more preferably an alkyl group having 1 to 3 carbon atoms, from the viewpoint of further improving the cycle characteristics, fillability, and load characteristics of the positive electrode active material. Three $R^{212}$s, three $R^{213}$s, and three $R^{214}$s each independently may be selected from $R^{21}$ of the general formula (2), or may be mutually the same group.

$R^{32}$s each independently are a divalent hydrocarbon group having 1 to 20 carbon atoms, preferably a divalent hydrocarbon group having 1 to 10 carbon atoms, and more preferably a divalent hydrocarbon group having 1 to 5 carbon atoms from the viewpoint of further improving the cycle characteristics, fillability, and load characteristics of the positive electrode active material. The divalent hydrocarbon group as $R^{32}$ may be a divalent saturated aliphatic hydrocarbon group (for example, an alkylene group) or a divalent unsaturated aliphatic hydrocarbon group (for example, an alkenylene group). The divalent hydrocarbon group as $R^{32}$ is preferably a divalent saturated aliphatic hydrocarbon group (in particular, an alkylene group) from the viewpoint of further improving the cycle characteristics, fillability, and load characteristics of the positive electrode active material. Examples of the divalent saturated aliphatic hydrocarbon group (in particular, an alkylene group) as $R^{32}$ include a group represented by $-(CH_2)_q-$ (wherein q is an integer of 1 to 10, more preferably an integer of 1 to 5). All $R^{32}$s each independently may be selected from these $R^{32}$, or may be mutually the same group.

Specific examples of the compound (2F) represented by such a general formula are shown in the following table.

[Table 2F]

| Specific examples of compound (2F) | | | | |
|---|---|---|---|---|
| Compound | Three $R^{212}$ | Three $R^{213}$ | Three $R^{214}$ | Three $R^{32}$ |
| 2F-1 | Methyl group | Methyl group | Methyl group | $-CH_2CH_2CH_2-$ |
| 2F-2 | Ethyl group | Ethyl group | Ethyl group | $-CH_2CH_2CH_2-$ |

The compound (2A) represented by the general formula (2A), the compound (2B) represented by the general formula (2B), the compound (2C) represented by the general formula (2C), the compound (2D) represented by the general formula (2D), the compound (2E) represented by the general formula (2E), and the compound (2F) represented by the general formula (2F) can be obtained as commercially available products, or can be produced by a known method.

For example, the compound (2A) can be obtained as commercially available 1,2-bis(trimethoxysilyl)ethane (manufactured by Tokyo Chemical Industry Co., Ltd.) or 1,6-bis(trimethoxysilyl)hexane (manufactured by Tokyo Chemical Industry Co., Ltd.).

For example, the compound (2C) can be obtained as commercially available X-12-5263 HP (manufactured by Shin-Etsu Chemical Co., Ltd.).

For example, the compound (2D) can be obtained as commercially available dimethyldimethoxysilane (manufactured by Tokyo Chemical Industry Co., Ltd.).

For example, the compound (2F) can be obtained as commercially available tris[3-(trimethoxysilyl)-propyl] isocyanurate (manufactured by Tokyo Chemical Industry Co., Ltd.).

The second metal alkoxide may be, for example, a compound represented by the general formula (2A), (2B), (2C), (2D), (2E) or (2F), or a mixture thereof. The second metal alkoxide is preferably a compound represented by the general formula (2A), (2B), (2C) or (2D) or a mixture thereof, and more preferably a compound represented by the general formula (2A) or (2D) or a mixture thereof from the viewpoint of further improving the cycle characteristics, fillability, and load characteristics of the positive electrode active material.

The content of the second metal alkoxide in the coating 2 (that is, the reactant constituting the coating) is usually 1 wt% or more and 85 wt% or less with respect to the total weight thereof (for example, the total weight of the first metal alkoxide, the second metal alkoxide, and the third metal alkoxide), and the content is preferably 1 wt% or more and 80 wt% or less, more preferably 1 wt% or more and 60 wt% or less, further preferably 1 wt% or more and 50 wt% or less, and particularly preferably 7 wt% or more and 36 wt% or less, from the viewpoint of further improving the cycle characteristics, the fillability, and the load characteristics of the positive electrode active material. The coating may contain two or more kinds of second metal alkoxides, and in that case, the total amount thereof may be within the above range. The content of the second metal alkoxide in the coating 2 may be a proportion of the blending amount of the second metal alkoxide to the total blending amount of the first metal alkoxide, the second metal alkoxide, and the third metal alkoxide.

The third metal alkoxide is a metal alkoxide containing only one metal atom-carbon atom bond in one molecule, and is, for example, an alkoxide compound in which one hand is bonded to a monovalent hydrocarbon group ($-R^{12}$) and all the remaining hands are bonded to an alkoxy group ($-OR^{11}$) among the hands of the metal. In the third metal alkoxide, the metal atom-carbon atom bond is a direct covalent bond between a metal atom and a carbon atom. In the third metal alkoxide, the carbon atom constituting the metal atom-carbon atom bond is a carbon atom constituting a monovalent hydrocarbon group (for example, an alkyl group or an alkenyl group). The third metal alkoxide contains only one such metal atom-carbon atom bond in one molecule. The metal atom of the third metal alkoxide is silicon. The third metal alkoxide reduces the surface free energy of the coating 2 and imparts more sufficient slipperiness to the surface of the coating 2. It is considered that such sufficient slipperiness is based on a monovalent hydrocarbon group 20 of the third metal alkoxide as shown in FIG. 4. Therefore, it is considered that the positive electrode active material of the present invention has more sufficiently excellent fillability, and ion conductivity when ions (in particular, lithium ions) responsible for electron transfer permeate the coating sufficiently improves. FIG. 4 is a schematic conceptual diagram showing a main surface state of the organic-inorganic hybrid coating in the positive electrode active material according to the present invention.

The third metal alkoxide is specifically a compound represented by the following general formula (3).

[Chemical Formula 3]

$$R^{12}\text{-Si}(OR^{11})_3 \qquad (3)$$

In the formula (3), $R^{11}$s each independently are an alkyl group having 1 to 10 carbon atoms, preferably an alkyl group having 1 to 5 carbon atoms, and more preferably an alkyl group having 1 to 3 carbon atoms from the viewpoint of further improving the fillability and the loading characteristics of the positive electrode active material. Examples of such an alkyl group include a methyl group, an ethyl group, n-propyl, an isopropyl group, a n-butyl group, an isobutyl group, a sec-butyl group, a tert-butyl group, a n-pentyl group, a n-hexyl group, a n-heptyl group, a n-octyl group, a n-nonyl group, and a n-decyl group. All $R^{11}$s each independently may be selected from the above-described alkyl groups, or all $R^{11}$s may be mutually the same group selected from the above-described alkyl groups.

$R^{12}$ is a monovalent hydrocarbon group having 8 to 30 carbon atoms, preferably a monovalent hydrocarbon group having 12 to 24 carbon atoms, and more preferably a monovalent hydrocarbon group having 14 to 20 carbon atoms from the viewpoint of further improving the fillability and load characteristics of the positive electrode active material. The monovalent hydrocarbon group as $R^{12}$ may be a saturated aliphatic hydrocarbon group (for example, an alkyl group) or an unsaturated aliphatic hydrocarbon group (for example, an alkenyl group). The monovalent hydrocarbon group as $R^{12}$ is preferably a saturated aliphatic hydrocarbon group (in particular, an alkyl group) from the viewpoint of further improving the fillability and the load characteristics of the positive electrode active material. Examples of the monovalent saturated aliphatic hydrocarbon group (in particular, alkyl group) as $R^{12}$ include an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an eicosyl group.

Specific examples of the compound (3) represented by such a general formula are shown in the following table.

[Table 3]

| Specific examples of compound (3) | | | | |
|---|---|---|---|---|
| Compound | $R^{12}$ | $R^{11}$ | $R^{11}$ | $R^{11}$ |
| 3A-1 | Octadecyl group | Methyl group | Methyl group | Methyl group |
| 3A-2 | Hexadecyl group | Methyl group | Methyl group | Methyl group |
| 3A-3 | Decyl group | Methyl group | Methyl group | Methyl group |
| 3A-4 | Octadecyl group | Ethyl group | Ethyl group | Ethyl group |
| 3A-5 | Hexadecyl group | Ethyl group | Ethyl group | Ethyl group |
| 3A-6 | Decyl group | Ethyl group | Ethyl group | Ethyl group |

The compound (3) represented by the general formula (3) can be obtained as a commercially available product, or can be produced by a known method.

For example, the compound (3) can be obtained as commercially available product octadecyltrimethoxysilane (manufactured by Tokyo Chemical Industry Co., Ltd.), hexadecyltrimethoxysilane (manufactured by Tokyo Chemical Industry Co., Ltd.), or decyltrimethoxysilane (manufactured by Tokyo Chemical Industry Co., Ltd.).

The content of the third metal alkoxide in the coating 2 (that is, the reactant constituting the coating) is usually 0 wt% or more and 90 wt% or less with respect to the total weight thereof (for example, the total weight of the first metal alkoxide, the second metal alkoxide, and the third metal alkoxide), and the content is preferably 5 wt% or more and 90 wt% or less from the viewpoint of improving the fillability and the loading characteristics of the positive electrode active material. The content of the third metal alkoxide is preferably 20 wt% or more and 90 wt% or less, more preferably 25 wt% or more and 90 wt% or less, further preferably 28 wt% or more and 90 wt% or less, and particularly preferably 28 wt% or more and 80 wt% or less with respect to the total weight of the positive electrode active material, from the viewpoint of further improving the cycle characteristics, fillability, and load characteristics of the positive electrode active material. The coating may contain two or more kinds of third metal alkoxides, and in that case, the total amount thereof may be within the above range. The content of the third metal alkoxide may be 0 wt%. This means that the present invention (in particular, the present invention A) may contain the third metal alkoxide, or does not have to contain the third metal alkoxide. The content of the third metal alkoxide in the coating 2 may be a proportion of the blending amount of the third metal alkoxide to the total blending amount of the first metal alkoxide, the second metal alkoxide, and the third metal alkoxide.

The content of the coating 2 in the positive electrode active material 10 is usually 0.010 wt% or more and 2.000 wt% or less with respect to the total weight of the positive electrode active material 10 (that is, the total amount of the positive electrode active material core material and the coating), and from the viewpoint of further improving the cycle characteristics, the fillability, and the load characteristics of the positive electrode active material, the content is preferably 0.020 wt% or more and 1.500 wt% or less, more preferably 0.080 wt% or more and 1.000 wt% or less, still more preferably 0.050 wt% or more and 0.400 wt% or less, and particularly preferably 0.070 wt% or more and 0.400 wt% or less. In the calculation of the content, the content was calculated on the assumption that the total amount of the alkoxide contained in the metal alkoxide undergoes dehydration condensation reaction and a reactant having no other structure change is obtained. For example, the weight of the reactant obtained by dehydration condensation reaction of the total amount of the alkoxide contained in 1 g of 1,2-bis(trimethoxysilyl)ethane is 0.49 g. The content of the coating 2 may be a proportion of the total blending amount of the first metal alkoxide, the second metal alkoxide, and the third metal alkoxide constituting the coating 2 to the total weight of the positive electrode active material (that is, the total amount of the weight of the positive electrode active material core material and the total blending amount).

The positive electrode active material of the present invention can be produced by a method including stirring a positive electrode active material core material together with a predetermined metal alkoxide in an alkaline solvent. The predetermined metal alkoxide refers to a metal alkoxide mixture containing at least the first metal alkoxide and the second metal alkoxide in the present invention A, and refers to a metal alkoxide mixture containing at least the first metal alkoxide, the second metal alkoxide, and the third metal alkoxide in the present invention B. After stirring, specifically, the positive electrode active material core material is separated by filtration, washed, and dried by heating to obtain a positive electrode active material in which a coating having a network structure is formed on the surface of the positive electrode active material core material. The coating method is not limited to the above method as long as it can coat the active material core material, and may be performed by a coating method such as spraying or dry mixing.

The compounding ratio (that is, the use amount ratio) of the first metal alkoxide, the third metal alkoxide, and the second metal alkoxide is usually the content ratio of each metal alkoxide in the coating as it is, and thus may be a blending ratio according to a desired content ratio.

The blending amount of the first metal alkoxide is usually 0.001 parts by weight or more and 8 parts by weight or less with respect to 100 parts by weight of the positive electrode active material core material, and is preferably 0.005 parts by weight or more and 5 parts by weight or less, more preferably 0.015 parts by weight or more and 0.80 parts by weight or less, and still more preferably 0.015 parts by weight or more and 0.50 parts by weight or less, from the viewpoint of further improving the cycle characteristics, the fillability, and the load characteristics of the positive electrode active material.

The blending amount of the second metal alkoxide is usually 0.001 parts by weight or more and 5 parts by weight or less with respect to 100 parts by weight of the positive electrode active material core material, and is preferably 0.005 parts by weight or more and 3 parts by weight or less, more preferably 0.015 parts by weight or more and 1.00 parts by weight or less, and still more preferably 0.015 parts by weight or more and 0.50 parts by weight or less, from the viewpoint of further improving the cycle characteristics, the fillability, and the load characteristics of the positive electrode active material.

The blending amount of the third metal alkoxide is usually 0 parts by weight or more and 10 parts by weight or less with respect to 100 parts by weight of the positive electrode active material core material, and is preferably 0.001 parts by weight or more and 10 parts by weight or less from the viewpoint of improving the fillability and the load characteristic of the positive electrode active material, and is preferably 0.01 parts by weight or more and 10 parts by weight or less, more preferably 0.015 parts by weight or more and 5 parts by weight or less, still more preferably 0.05 parts by weight or more and 1.00 parts by weight or less, and still more preferably 0.05 parts by weight or more and 0.50 parts by weight or less from the viewpoint of further improving the cycle characteristic, the fillability and the load characteristic of the positive electrode active material. The blending amount of the third metal alkoxide may be 0 parts by weight. This means that the present invention (in particular, the present invention A) may contain the third metal alkoxide, or does not have to contain the third metal alkoxide.

The total blending amount of the first metal alkoxide, the second metal alkoxide, and the third metal alkoxide is not particularly limited as long as a coating is formed on the surface of the positive electrode active material core material, and is, for example, 0.02 parts by weight or more and 15 parts by weight or less with respect to 100 parts by weight of the positive electrode active material core material, and is preferably 0.02 parts by weight or more and 5 parts by weight or less, and more preferably 0.05 parts by weight or more and 2 parts by weight or less from the viewpoint of further improving the cycle characteristics, fillability, and load characteristics of the positive electrode active material. By adjusting the total blending amount, the coating amount of the coating 2 in the positive electrode active material 10 can be controlled. The more the total blending amount increases, the more the total coating amount increases.

The solvent is not particularly limited as long as it does not inhibit the reaction of each metal alkoxide such as the first metal alkoxide, the second metal alkoxide, and the third metal alkoxide, and for example, monoalcohols, ethers, glycols, or glycol ethers are preferable. In a preferred embodiment, the solvent may be a monoalcohol such as methanol, ethanol, 1-propanol, 2-propanol, 1-butanol, 2-butanol, iso-butyl alcohol, 1-pentanol, 2-pentanol, or 2-methyl -2 pentanol; an ether such as 2-methoxyethanol, 2-ethoxyethanol, or 2-butoxyethanol; a glycol such as ethylene glycol, diethylene glycol, triethylene glycol, and propylene glycol; or a glycol ether such as dipropylene glycol monomethyl ether, diethylene glycol monomethyl ether, diethylene glycol monoethyl ether, diethylene glycol monobutyl ether, triethylene glycol monomethyl ether, or diethylene glycol monohexyl ether. A preferred solvent is a monoalcohol. Water may be contained as necessary. The solvent may be used singly, or in combination of two or more kinds thereof. The solvent may contain various additives, for example, a catalyst, a pH adjusting agent, a stabilizer, a thickener, and the like. Examples of the additive include an acid compound such as a boric acid compound and a base compound such as an ammonia compound. The blending amount of the solvent is not particularly limited as long as each metal alkoxide can be uniformly present on the surface of the positive electrode active material core material, and may be, for example, 20 parts by weight or more and 200 parts by weight or less, and particularly 30 parts by weight or more and 150 parts by weight or less with respect to 100 parts by weight of the positive electrode active material core material.

The temperature of the mixture during stirring is not particularly limited as long as each metal alkoxide can be uniformly present on the surface of the positive electrode active material core material, and is, for example, 10°C or more and 70°C or less, preferably 15°C or more and 35°C or less.

The stirring time is not particularly limited either as long as each metal alkoxide can be uniformly present on the surface of the positive electrode active material core material, and is, for example, 10 minutes or more and 5 hours or less, preferably 30 minutes or more and 3 hours or less.

Washing is performed to remove the remaining catalyst. For example, washing is performed by bringing a residue obtained by filtration into contact with a washing solvent. The washing solvent is not particularly limited, and may be, for example, acetone.

The solvent used in the washing is removed by heating and drying. The heating temperature is usually 15°C or more (particularly 15°C or more and 250°C or less), and is preferably 15°C or more and 200°C or less from the viewpoint of solvent removal. The heating time is usually 30 minutes or more (particularly 30 minutes or more and 24 hours or less), and is preferably 60 minutes or more and 12 hours or less from the viewpoint of solvent removal.

[Positive Electrode]

The positive electrode of the present invention includes at least a positive electrode layer and a positive electrode current collector (foil), and the positive electrode layer contains the above-described coated positive electrode active material. The coated positive electrode active material of the positive electrode layer is made of, for example, a particulate material, and it is preferable that a binder is contained in the positive electrode layer for sufficient contact between particles and shape retention. The positive electrode layer preferably further contains a conductive assistant to facilitate transfer of electrons promoting the battery reaction. As described above, because a plurality of components are contained, the positive electrode layer may also be referred to as "positive electrode mixture layer" or the like.

The content of the positive electrode active material in the positive electrode layer is usually 50 wt% or more and 95 wt% or less with respect to the total weight of the positive electrode layer, and is preferably 70 wt% or more and 95 wt% or less, more preferably 85 wt% or more and 98 wt% or less, still more preferably 85 wt% or more and 95 wt% or less, from the viewpoint of further improving the cycle characteristics, fillability, and load characteristics of the positive electrode active material.

The positive electrode layer may contain a conventional positive electrode active material together with the coated positive electrode active material described above. When the positive electrode layer contains a conventional positive electrode active material together with the coated positive electrode active material described above, the content of the positive electrode active material described above is the content of all positive electrode active materials. In this case, the coated positive electrode active material is usually contained in an amount of 50 wt% or more, preferably 70 wt% or more, and more preferably 90 wt% or more with respect to the all positive electrode active materials. The conventional positive electrode active material is, for example, a material that contributes to occlusion and release of lithium ions. From such a viewpoint, the conventional positive electrode active material is preferably, for example, a lithium-containing composite oxide. More specifically, the conventional positive electrode active material is preferably a lithium transition metal composite oxide containing lithium and at least one transition metal selected from the group consisting of cobalt, nickel, manganese, and iron. For example, the conventional positive electrode active material may be lithium cobalt oxide, lithium nickel oxide, lithium manganese oxide, lithium iron phosphate, or a material obtained by replacing a part of these transition metals with another metal.

The binder that may be contained in the positive electrode layer is not particularly limited, and examples thereof include at least one selected from the group consisting of polyvinylidene fluoride, vinylidene fluoride-hexafluoropropylene copolymer, vinylidene fluoride-tetrafluoroethylene copolymer, polytetrafluoroethylene, and the like. In a more preferred embodiment, the binder of the positive electrode layer is polyvinylidene fluoride.

The content of the binder in the positive electrode layer is usually 1 wt% or more and 20 wt% or less with respect to the total weight of the positive electrode layer, and is preferably 1 wt% or more and 10 wt% or less, more preferably 1 wt% or more and 8 wt% or less, and still more preferably 2 wt% or more and 8 wt% or less from the viewpoint of further improving the cycle characteristics, fillability, and load characteristics of the positive electrode active material.

The conductive assistant that may be contained in the positive electrode layer is not particularly limited, and examples thereof include at least one selected from carbon blacks such as thermal black, furnace black, channel black, Ketjen black, and acetylene black, carbon fibers such as graphite, carbon nanotube, and vapor-grown carbon fiber, metal powders such as copper, nickel, aluminum, and silver, polyphenylene derivatives, and the like. In a more preferred embodiment, the conductive assistant of the positive electrode layer is carbon black (in particular, Ketjen black).

In a further preferred embodiment, the binder and the conductive assistant of the positive electrode layer are a combination of polyvinylidene fluoride and carbon black (in particular, Ketjen black).

The content of the conductive assistant in the positive electrode layer is usually 1 wt% or more and 20 wt% or less with respect to the total weight of the positive electrode layer, and is preferably 1 wt% or more and 10 wt% or less, more preferably 1 wt% or more and 8 wt% or less, and still more preferably 2 wt% or more and 8 wt% or less from the viewpoint of further improving the cycle characteristics, fillability, and load characteristics of the positive electrode active material.

The thickness of the positive electrode layer is not particularly limited, and may be, for example, 1 $\mu$m or more and 300 $\mu$m or less, particularly 5 $\mu$m or more and 200 $\mu$m or less. The thickness of the positive electrode layer is the thickness inside the battery (in particular, secondary battery), and an average value of measured values at any 50 points is used.

The positive electrode current collector is a member that contributes to collecting and supplying electrons generated in the active material due to the battery reaction. Such a current collector may be a sheet-like metal member or may have a porous or perforated form. For example, the current collector may be a metal foil, a punching metal, a net, an expanded metal, or the like. The positive electrode current collector used for the positive electrode is preferably made of a metal foil containing at least one selected from the group consisting of aluminum, stainless steel, nickel, and the like, and may be, for example, an aluminum foil.

In the positive electrode, the positive electrode layer may be provided on at least one face of the positive

electrode current collector. For example, in the positive electrode, the positive electrode layer may be provided on both faces of the positive electrode current collector, or the positive electrode layer may be provided on one face of the positive electrode current collector. A preferable positive electrode has the positive electrode layer on both faces of the positive electrode current collector from the viewpoint of further increasing the capacity of the battery (particularly secondary battery).

The positive electrode may be obtained, for example, by coating a positive electrode current collector with a positive electrode layer slurry prepared by mixing a positive electrode active material and a binder in a dispersion medium, drying the slurry, and thereafter rolling the dried coating with a roll press machine or the like.

In the present invention, the positive electrode active material can be filled at a relatively high volume density in the positive electrode layer by rolling performed at a relatively low pressure. The linear pressure during rolling may be, for example, 0.1 t/cm or more and 1.0 t/cm or less, and is preferably 0.5 t/cm or more and 1.0 t/cm or less from the viewpoint of further improving the cycle characteristics and fillability of the positive electrode active material, and preventing cracking of the positive electrode active material, occurrence of irregularities and breakage in the positive electrode current collector, and peeling of the positive electrode layer from the current collector. The roll temperature is usually 100°C or more and 200°C or less, and is preferably 110°C or more and 150°C or less from the viewpoints of further improving the cycle characteristics and fillability of the positive electrode active material, and preventing cracking of the positive electrode active material, occurrence of irregularities and breakage in the positive electrode current collector, and peeling of the positive electrode layer from the current collector. The pressing speed is usually 1 m/min or more and 20 m/min or less, and is preferably 5 m/min or more and 15 m/min or less from the viewpoints of further improving the cycle characteristics and fillability of the positive electrode active material, and preventing cracking of the positive electrode active material, occurrence of irregularities and breakage in the positive electrode current collector, and peeling of the positive electrode layer from the current collector.

[Battery]

The present invention provides a battery such as a secondary battery or a primary battery. In the present specification, the term "secondary battery" refers to a battery that can be repeatedly charged and discharged. The "secondary battery" is not excessively limited by its name, and may encompass, for example, an electrochemical device such as a "power storage device". The term "primary battery" refers to a battery capable of only discharging. The battery of the present invention is preferably a secondary battery.

The secondary battery of the present invention includes the positive electrode described above. In the secondary battery of the present invention, in addition to the positive electrode described above, a negative electrode, a separator disposed between the positive electrode and the negative electrode, and an electrolyte are usually enclosed in an exterior body.

In the secondary battery of the present invention, the positive electrode, the negative electrode, and the separator disposed between the positive electrode and the negative electrode constitute an electrode assembly. In the secondary battery of the present invention, the electrode assembly may have any structure as long as the above-described positive electrode (in particular, the above-described positive electrode active material) is included. This is because the effect of improving the fillability and the load characteristics by the positive electrode active material can be obtained regardless of the structure of the electrode assembly. Examples of the structure that the electrode assembly may have include a stacked structure (planar stacked structure), a wound structure (jelly roll structure), and a stack and folding structure. Specifically, for example, the electrode assembly may have a planar stacked structure in which one or more positive electrodes and one or more negative electrodes are stacked in a planar shape with a separator interposed therebetween. For example, the electrode assembly may also have a wound structure (jelly roll type) in which a positive electrode, a negative electrode, and a separator disposed between the positive electrode and the negative electrode are wound in a roll shape. For example, the electrode assembly may also have a so-called stack and folding structure in which a positive electrode, a separator, and a negative electrode are stacked on a long film and then folded.

The negative electrode includes at least a negative electrode layer and a negative electrode current collector (foil), and the negative electrode layer may be provided on at least one face of the negative electrode current collector. For example, in the negative electrode, the negative electrode layer may be provided on both faces of the negative electrode current collector, or the negative electrode layer may be provided on one face of the negative electrode current collector. The negative electrode layer is preferably provided on both faces of the negative electrode current collector in the negative electrode from the viewpoint of further increasing the capacity of the secondary battery.

The negative electrode layer contains a negative electrode active material. The positive electrode active material contained in the positive electrode layer and the negative electrode active material contained in the negative electrode layer described above are substances directly involved in the transfer of electrons in the secondary battery, and are main substances of positive and negative electrodes responsible for charge and discharge, that is, the battery reaction. More specifically, ions are brought in the electrolyte due to the "positive electrode active material contained in the positive

electrode layer" and the "negative electrode active material contained in the negative electrode layer", and such ions move between the positive electrode and the negative electrode to transfer electrons, whereby charge and discharge are performed. The positive electrode and the negative electrode are preferably electrodes capable of occluding and releasing lithium ions, that is, the positive electrode layer and the negative electrode layer are preferably layers capable of occluding and releasing lithium ions. That is, a secondary battery in which lithium ions move between the positive electrode and the negative electrode with the electrolyte interposed therebetween whereby charge and discharge of the battery is made is preferable. When lithium ions are involved in charge and discharge, the secondary battery according to the present embodiment corresponds to a so-called "lithium ion battery".

The negative electrode active material of the negative electrode layer is made of, for example, a particulate material, and preferably contains a binder for sufficient contact between particles and shape retention, and a conductive assistant may be contained in the negative electrode layer to facilitate transfer of electrons promoting the battery reaction. Because a plurality of components are contained as described above, the negative electrode layer may also be referred to as a "negative electrode mixture layer" or the like.

The negative electrode active material is preferably a material that contributes to occlusion and release of lithium ions. From such a viewpoint, the negative electrode active material is preferably, for example, various kinds of carbon material, an oxide, or a lithium alloy.

Examples of the various kinds of carbon material of the negative electrode active material include graphite (natural graphite, artificial graphite), hard carbon, soft carbon, and diamond-like carbon. In particular, graphite is preferable because it has high electron conductivity and excellent adhesion to the negative electrode current collector. Examples of the oxide of the negative electrode active material include at least one selected from the group consisting of silicon oxide, tin oxide, indium oxide, zinc oxide, lithium oxide, and the like. The lithium alloy of the negative electrode active material may be any metal that may be alloyed with lithium, and may be, for example, a binary, ternary, or higher alloy of lithium and a metal such as Al, Si, Pb, Sn, In, Bi, Ag, Ba, Ca, Hg, Pd, Pt, Te, Zn, or La. Such an oxide is preferably amorphous as its structural form. This is because deterioration due to nonuniformity such as crystal grain boundaries or defects is less likely to occur. In a more preferred embodiment, the negative electrode active material of the negative electrode layer is artificial graphite.

The binder that may be contained in the negative electrode layer is not particularly limited, and examples thereof include at least one selected from the group consisting of styrene butadiene rubber, polyacrylic acid, polyvinylidene fluoride, a polyimide-based resin, and a polyamideimide-based resin. In a more preferred embodiment, the binder contained in the negative electrode layer is styrene butadiene rubber. The conductive assistant that may be contained in the negative electrode layer is not particularly limited, and examples thereof include at least one selected from carbon blacks such as thermal black, furnace black, channel black, Ketjen black, and acetylene black, carbon fibers such as graphite, carbon nanotube, and vapor-grown carbon fiber, metal powders such as copper, nickel, aluminum, and silver, polyphenylene derivatives, and the like. The negative electrode layer may contain a component derived from a thickener component (for example, carboxymethyl cellulose) used at the time of producing the battery.

In a more preferred embodiment, the negative electrode active material and the binder in the negative electrode layer are a combination of graphite and polyimide.

The thickness of the negative electrode layer is not particularly limited, and may be, for example, 1 μm or more and 300 μm or less, particularly 5 μm or more and 200 μm or less. The thickness of the negative electrode layer is the thickness inside the secondary battery, and an average value of measured values at any 50 points is used.

A negative electrode current collector used for the negative electrode is a member that contributes to collecting and supplying electrons generated in the active material due to the battery reaction. Similarly to the positive electrode current collector, the negative electrode current collector may be a sheet-like metal member or may have a porous or perforated form. For example, the negative electrode current collector may be a metal foil, a punching metal, a net, an expanded metal, or the like. The negative electrode current collector used for the negative electrode is preferably made of a metal foil containing at least one selected from the group consisting of copper, stainless steel, nickel, and the like, and may be, for example, a copper foil.

The separator is a member provided from the viewpoint of preventing a short circuit due to contact between the positive and negative electrodes, holding the electrolyte, and the like. In other words, it can be said that the separator is a member that allows ions to pass while preventing electronic contact between the positive electrode and the negative electrode. Preferably, the separator is a porous or microporous insulating member, and has a membrane form due to its small thickness. Although it is merely an example, a microporous membrane formed of polyolefin may be used as the separator. In this regard, the microporous membrane used as the separator may contain, for example, only polyethylene (PE) or only polypropylene (PP) as polyolefin. Furthermore, the separator may be a laminated body including a "microporous membrane formed of PE" and a "microporous membrane formed of PP". The surface of the separator may be covered with an inorganic particle coating layer and/or an adhesive layer or the like. The surface of the separator may have adhesiveness.

The thickness of the separator is not particularly limited, and may be, for example, 1 μm or more and 100 μm

or less, particularly 5 μm or more and 20 μm or less. The thickness of the separator is the thickness inside the secondary battery (particularly, the thickness between the positive electrode and the negative electrode), and an average value of measured values at any 50 points is used.

The electrolyte assists movement of metal ions released from the electrodes (positive electrode and negative electrode). The electrolyte may be a "nonaqueous" electrolyte, such as an organic electrolyte or an organic solvent, or an "aqueous" electrolyte containing water. The secondary battery of the present invention is preferably a nonaqueous electrolyte secondary battery using an electrolyte containing a "nonaqueous" solvent as an electrolyte and a solute. The electrolyte may have a form such as a liquid form or a gel form (in the present specification, the "liquid" nonaqueous electrolyte is also referred to as a "nonaqueous electrolyte solution").

As a specific solvent of the nonaqueous electrolyte, a solvent containing at least a carbonate is preferable. Such a carbonate may be a cyclic carbonate and/or a chain carbonate. Although not particularly limited, examples of the cyclic carbonate include at least one selected from the group consisting of propylene carbonate (PC), ethylene carbonate (EC), butylene carbonate (BC), and vinylene carbonate (VC). Examples of the chain carbonate include at least one selected from the group consisting of dimethyl carbonate (DMC), diethyl carbonate (DEC), ethyl methyl carbonate (EMC), and dipropyl carbonate (DPC). In one preferred embodiment of the present invention, a combination of a cyclic carbonate and a chain carbonate is used as the nonaqueous electrolyte, and for example, a mixture of ethylene carbonate and ethyl methyl carbonate is used.

As a specific solute of the nonaqueous electrolyte, for example, a Li salt such as $LiPF_6$ or $LiBF_4$ is preferably used.

The exterior body is not particularly limited, and may be, for example, a flexible pouch (soft bag body) or a hard case (hard casing).

When the exterior body is a flexible pouch, the flexible pouch is usually formed of a laminate film, and sealing is achieved by heat-sealing the peripheral edge portion. As the laminate film, a film obtained by laminating a metal foil and a polymer film is commonly used, and specifically, a film having a three-layer structure of outer layer polymer film/metal foil/inner layer polymer film is exemplified. The outer layer polymer film is for preventing damage of the metal foil due to permeation and contact of moisture and the like, and polymers such as polyamide and polyester may be suitably used. The metal foil is for preventing permeation of moisture and gas, and a foil of copper, aluminum, stainless steel, or the like may be suitably used. The inner layer polymer film is for protecting the metal foil from the electrolyte to be housed inside and for melt-sealing at the time of heat sealing, and polyolefin (for example, polypropylene) or acid-modified polyolefin may be suitably used. The thickness of the laminate film is not particularly limited, and is preferably, for example, 1 μm or more and 1 mm or less.

When the exterior body is a hard case, the hard case is usually formed of a metal plate, and sealing is achieved by irradiating the peripheral portion with laser. As the metal plate, a metal material made of aluminum, nickel, iron, copper, stainless steel, or the like is commonly used. The thickness of the metal plate is not particularly limited, and is preferably, for example, 1 μm or more and 1 mm or less.

## EXAMPLES

### <Positive Electrode Active Material Core Material>

Lithium cobalt oxide ($LiCoO_2$) was prepared as the positive electrode active material core material.

### <First Metal Alkoxide>

As the first metal alkoxide, the following compounds were prepared.

- tetraethoxysilane (corresponding to the compound (1A-1))
- tetrabutoxytitanium (corresponding to the compound (1B-1))
- triisopropoxyaluminum (corresponding to the compound (1C-1))
- zirconium(IV) tetrabutoxide (corresponding to the compound (1D-2))

### <Second Metal Alkoxide>

As the second metal alkoxide, the following compounds were prepared.

- the compound (2A-1)
- the compound (2A-2)
- the compound (2B-1)
- the compound (2C-1)

- the compound (2D-1)

<Third Metal Alkoxide>

As the third metal alkoxide, the following compounds were prepared.

- octadecyltrimethoxysilane (corresponding to the compound (3A-1))
- hexadecyltrimethoxysilane (corresponding to the compound (3A-2))
- decyltrimethoxysilane (corresponding to the compound (3A-3))
- hexyltrimethoxysilane (Comparative Example)

<Production of Positive Electrode Active Material>

(Example 1A)

Ethanol in an amount of 25 g in which 6 g of a 28 wt% aqueous ammonia was dissolved was prepared. To this solution, 35 g of lithium cobalt oxide (average primary particle diameter: 20 μm) was added. Next, the first metal alkoxide, the second metal alkoxide, and the third metal alkoxide were added such that the use amount with respect to 100 parts by weight of the added lithium cobalt oxide has the ratio in Table 4. Thereafter, the mixture was stirred at room temperature (20°C) for 120 minutes. The reaction solution was separated by filtration, washed with acetone, and the coated powder was dried at 80°C for 120 minutes to form a coating (thickness: 10 nm) on the surface of lithium cobalt oxide. Thus, the preparation of lithium cobalt oxide (positive electrode active material) coated with an organic-inorganic hybrid coating was completed.

(Examples 2A to 5A, Examples 1B to 16B and Comparative Examples 1 to 5)

A positive electrode active material was produced in the same manner as in Example 1A except that the kinds and blending amounts of the first metal alkoxide, the second metal alkoxide, and the third metal alkoxide were changed as shown in Table 4 in producing the positive electrode active material.

<Production of Battery>

• Step of Producing Positive Electrode

A positive electrode was produced as follows. First, 90 wt% of a positive electrode active material, 5 wt% of amorphous carbon powder (Ketjen black), and 5 wt% of polyvinylidene fluoride (PVdF) were mixed to prepare a positive electrode mixture. The positive electrode mixture was dispersed in N-methyl-2 pyrrolidone (NMP) to produce a positive electrode layer slurry, and then the positive electrode layer slurry was uniformly applied to both faces of a band-shaped aluminum foil (positive electrode current collector) having a thickness of 15 μm to form a coating. Next, the coating was dried with hot air, and then subjected to compression molding (roll temperature: 130°C, linear pressure: 0.7 t/cm, pressing speed: 10 m/min) with a roll press machine to form a positive electrode sheet having a positive electrode layer. Next, the positive electrode sheet was cut into a band shape of 48 mm × 300 mm to produce a positive electrode. Next, a positive electrode lead was attached to a positive electrode current collector exposed portion of the positive electrode.

• Step of Producing Negative Electrode

A negative electrode was produced as follows. First, graphite particles (average primary particle diameter: 20 μm) as a negative electrode active material and an NMP solution containing 20 wt% of a polyimide binder were mixed at a weight ratio (graphite particles : NMP solution) of 9 : 1 to produce a negative electrode layer slurry. Next, the negative electrode layer slurry was applied to both faces of a copper foil (negative electrode current collector) having a thickness of 15 μm using a bar coater having a gap of 35 μm to form a coating, and the coating was dried at 80°C. Next, the coating was subjected to compression molding with a roll press machine, and then heated at 700°C for 3 hours to form a negative electrode sheet having a negative electrode layer. The negative electrode sheet was cut into a band shape of 50 mm × 310 mm to produce a negative electrode. Next, a negative electrode lead was attached to a negative electrode current collector exposed portion of the negative electrode.

• Step of Producing Laminate Cell

The produced positive electrode and negative electrode were brought into close contact with each other with a separator made of a microporous polyethylene film having a thickness of 25 μm interposed therebetween, wound in the longitudinal direction, and compressed by attaching a protective tape to the outermost peripheral portion, whereby a flat-shaped wound electrode body was produced. Next, the wound electrode body was loaded between an exterior member, three sides of the exterior member were thermally fused, and one side was not thermally fused and had an opening. As the exterior member, a moisture-proof aluminum laminate film in which a nylon film having a thickness of 25 μm, an aluminum foil having a thickness of 40 μm, and a polypropylene film having a thickness of 30 μm were laminated in this order from the outermost layer was used.

• Preparation of Electrolytic Solution and Injection Step

A mixed solvent was prepared by mixing ethylene carbonate (EC) and ethyl methyl carbonate (EMC) to have a mass ratio of EC : EMC = 5 : 5. Next, lithium hexafluorophosphate (LiPF6) as an electrolyte salt was dissolved in the mixed solvent so as to be 1 mol/1 to prepare an electrolytic solution. The electrolytic solution was injected from the opening of the exterior member, and the remaining one side of the exterior member was thermally fused under reduced pressure and sealed. As a result, an intended nonaqueous electrolyte secondary battery was obtained.

<Evaluation of Battery Characteristics>

• Cycle Characteristics

Charging and discharging were performed in the first to 105th cycles under the following conditions, and the capacity retention ratio was obtained as the ratio of the "discharge capacity after the 101st cycle" to the "discharge capacity after the first cycle", and evaluated.

⊙; 79% or more (best);
○; 70% or more and less than 79% (good);
×; Less than 70% (problematic)

<u>First Cycle</u>

Charging conditions: After constant current charging at 45°C/0.5 C to 4.50 V, constant voltage charging was performed at 45°C/4.50 V to 0.025 C. Thereafter, a 10-minute pause was performed.
Discharging conditions: Constant current discharging was performed at 45°C/0.1 C to 3.00 V. Thereafter, a 10-minute pause was performed.

<u>Second Cycle</u>

Charging conditions: After constant current charging at 45°C/0.5 C to 4.50 V, constant voltage charging was performed at 45°C/4.50 V to 0.025 C. Thereafter, a 10-minute pause was performed.
Discharging conditions: Constant current discharging was performed at 45°C/0.2 C to 3.00 V. Thereafter, a 10-minute pause was performed.

<u>Third Cycle</u>

Charging conditions: After constant current charging at 45°C/0.5 C to 4.50 V, constant voltage charging was performed at 45°C/4.50 V to 0.025 C. Thereafter, a 10-minute pause was performed.
Discharging conditions: Constant current discharging was performed at 45°C/0.5 C to 3.00 V. Thereafter, a 10-minute pause was performed.

<u>Fourth Cycle</u>

Charging conditions: After constant current charging at 45°C/0.5 C to 4.50 V, constant voltage charging was performed at 45°C/4.50 V to 0.025 C. Thereafter, a 10-minute pause was performed.
Discharging conditions: Constant current discharging was performed at 45°C/1.0 C to 3.00 V. Thereafter, a 10-minute pause was performed.

Fifth Cycle

Charging conditions: After constant current charging at 45°C/0.5 C to 4.50 V, constant voltage charging was performed at 45°C/4.50 V to 0.025 C. Thereafter, a 10-minute pause was performed.
Discharging conditions: Constant current discharging was performed at 45°C/2.0 C to 3.00 V. Thereafter, a 10-minute pause was performed.

Sixth to 50th Cycles

Charging conditions: Charging and pausing were performed under the same conditions as the charging conditions of the first to fifth cycles.
Discharging conditions: Constant current discharging was performed at 45°C/0.5 C to 3.00 V. Thereafter, a 10-minute pause was performed.

51st to 55th Cycles

Charging conditions: Charging and pausing were performed under the same conditions as the charging conditions and the discharging conditions of the first to fifth cycles.

56th to 100th Cycles

Charging conditions and discharging conditions: Charging, discharging, and pausing were performed under the same conditions as the charging conditions and discharging conditions of the sixth to 50th cycles.

101st to 105th Cycles

Charging conditions: Charging and pausing were performed under the same conditions as the charging conditions and the discharging conditions of the first to fifth cycles.

• Fillability (Volume Density)

The volume density of the electrode was determined as follows.
For the positive electrode after the roll pressing, the thickness of the electrode was measured using a height meter, the thickness of the positive electrode layer was calculated by subtracting the thickness of the current collecting foil from the thickness of the electrode, and the volume density (g/cc) of the positive electrode layer was calculated.

⊙; 4.01 g/cc or more (best);
○; 3.96 g/cc or more and less than 4.01 g/cc (good);
×; less than 3.96 g/cc (problematic)

• Load Characteristic

Load characteristics were evaluated as follows.
First, constant current charging was performed at a charging current of 0.5 A, and then constant voltage charging was performed until the current value was reduced to 1/10. Thereafter, the discharge capacity at a discharge current of 0.2 A was measured. The discharge capacity obtained here was set to 1 C, charging was then performed under the above-described charging conditions, and discharging was then performed under the conditions of a discharge current of 0.1 C and an end voltage of 3.0 V to determine the discharge capacity. Next, charging was performed under the above-described charging conditions, and then discharging was performed under conditions of a discharge current of 2.0 C and an end voltage of 3.0 V. Next, load characteristics were determined by substituting the measured discharge capacity at a discharge current of 0.1 C and discharge capacity at a discharge current value of 2.0 C into the following formula.

⊙; 79% or more (best);
○; 77% or more and less than 79% (good);
×; less than 77% (problematic)

[Mathematical Formula 1]

$$\text{load characteristic [\%]} = (\text{discharge capacity at discharge current value of 0.2 C})/(\text{discharge capacity at discharge current value of 0.1 C}) \times 100$$

[Table 4]

| | Blending amount (parts by weight) (1) | | | | | | Hybrid coating | | Cycle characteristic | Volume density | | Load characteristic | |
|---|---|---|---|---|---|---|---|---|---|---|---|---|---|
| | First metal alkoxide species/amount x | | Second metal alkoxide species/amount y | | Third metal alkoxide species/ amount z | | Composition x/y/z (2) | Content (wt%) (3) | Capacity retention ratio (%) | (g/cc) | Evaluation | (%) | Evaluation |
| Example 1A | 1A-1 | 0.15 | 2A-1 | 0.05 | - | 0 | 75/25/0 | 0. 068 | 72 O | 3.93 | × | 76 | × |
| Example 2A | 1A-1 | 0.08 | 2A-1 | 0.07 | - - | 0 | 53/47/0 | 0. 057 | 80 ⊙ | 3.92 | × | 75 | × |
| Example 3A | 1A-1 | 0.08 | 2D-1 | 0.07 | - | 0 | 53/47/0 | 0.066 | 79 ⊙ | 3.90 | × | 75 | × |
| Example 4A | 1A-1 | 0.02 | 2D-1 | 0.16 | - | 0 | 20/80/0 | 0. 104 | 80 ⊙ | 3.90 | × | 75 | × |
| Comparative Example 1 | 1A-1 | 0.25 | - | 0 | - | 0 | 100/0/0 | 0. 072 | 51 × | 3.89 | × | 74 | × |
| Comparative Example 2 | - | 0 | 2A-1 | 0.17 | - | 0 | 0/100/0 | 0. 083 | 62 × | 3.90 | × | 76 | × |
| Comparative Example 3 | 1A-1 | 0.08 | - | 0 | 3A-1 | 0.12 | 40/0/60 | 0.121 | 64 × | 4.01 | ⊙ | 71 | × |
| Comparative Example 4 | - | 0 | 2A-2 | 0.10 | 3A-1 | 0.10 | 0/50/50 | 0.139 | 65 × | 3.95 | × | 78 | o |
| Comparative Example 5 | - | 0 | - | 0 | - | 0 | - | 0. 000 | 60 × | 3.90 | × | 77 | o |
| Example 1B | 1A-1 | 0.03 | 2A-1 | 0.003 | 3A-1 | 0.17 | 14.8/1.5/83.7 | 0. 149 | 80 ⊙ | 4.03 | ⊙ | 77 | ○ |
| Example 2B | 1A-1 | 0.02 | 2A-1 | 0.01 | 3A-1 | 0.17 | 10/5/85 | 0. 149 | 81 ⊙ | 4.02 | ⊙ | 78 | ○ |
| Example 3B | 1A-1 | 0.05 | 2A-2 | 0.03 | 3A-2 | 0.12 | 25/15/60 | 0. 128 | 79 ⊙ | 4.01 | ⊙ | 79 | ⊙ |
| Example 4B | 1A-1 | 0.10 | 2A-2 | 0.04 | 3A-1 | 0.06 | 50/20/30 | 0.101 | 80 ⊙ | 4.01 | ⊙ | 79 | ⊙ |
| Example 5B | 1A-1 | 1.00 | 2A-1 | 0.20 | 3A-1 | 0.50 | 58.8/11.8/29.4 | 0. 789 | 80 ⊙ | 4.04 | ⊙ | 77 | o |
| Example 6B | 1A-1 | 0.03 | 2A-1 | 0.003 | 3A-1 | 0.17 | 14.8/1.5/83.7 | 0. 149 | 80 ⊙ | 4.02 | ⊙ | 78 | ○ |
| Example 7B | 1A-1 | 0.02 | 2A-1 | 0.10 | 3A-1 | 0.17 | 6.9/34.5/58.6 | 0. 193 | 82 ⊙ | 4.03 | ⊙ | 79 | ⊙ |
| Example 8B | 1A-1 | 0.06 | 2A-1 | 0.03 | 3A-2 | 0.15 | 25/12.5/62.5 | 0.152 | 80 ⊙ | 4.03 | ⊙ | 79 | ⊙ |
| Example 9B | 1A-1 | 0.06 | 2A-1 | 0.03 | 3A-3 | 0.15 | 25/12.5/62.5 | 0.152 | 77 ⊙ | 3.99 | ○ | 79 | ⊙ |
| Example 10B | 1A-1 | 0.01 | 2A-1 | 0.005 | 3A-1 | 0.02 | 28.6/14.3/57.1 | 0. 022 | 79 ⊙ | 3.99 | ○ | 79 | ⊙ |

(continued)

| | Blending amount (parts by weight) (1) | | | | | | Hybrid coating | | Cycle characteristic | Volume density | | Load characteristic | |
|---|---|---|---|---|---|---|---|---|---|---|---|---|---|
| | First metal alkoxide species/amount x | | Second metal alkoxide species/amount y | | Third metal alkoxide species/amount z | | Composition x/y/z (2) | Content (wt%) (3) | Capacity retention ratio (%) | (g/cc) | Evaluation | (%) | Evaluation |
| Example 11B | 1B-1 | 0.05 | 2A-1 | 0.02 | 3A-1 | 0.17 | 20.8/8.3/70.8 | 0. 160 | 80 ⊙ | 4.01 | ⊙ | 81 | ⊙ |
| Example 12B | 1C-1 | 0.05 | 2A-1 | 0.02 | 3A-1 | 0.17 | 20.8/8.3/70.8 | 0. 149 | 79 ⊙ | 3.99 | ○ | 80 | ⊙ |
| Example 13B | 1A-1 | 0.05 | 2B-1 | 0.02 | 3A-1 | 0.17 | 20.8/8.3/70.8 | 0. 168 | 80 ⊙ | 4.00 | ○ | 79 | ⊙ |
| Example 14B | 1A-1 | 0.05 | 2C-1 | 0.02 | 3A-1 | 0.17 | 20.8/8.3/70.8 | 0. 166 | 77 ⊙ | 4.00 | ○ | 78 | ○ |
| Example 15B | 1D-2 | 0.07 | 2A-1 | 0.01 | 3A-1 | 0.01 | 77.8/11.1/11.1 | 0. 065 | 72 ○ | 4.00 | ○ | 80 | ⊙ |
| Example 16B | 1A-1 | 0.02 | 2D-1 | 0.10 | 3A-1 | 0.09 | 16.7/8.3/75 | 0. 085 | 80 ⊙ | 4.04 | ⊙ | 80 | ⊙ |
| Example 5A | 1B-1 | 0.05 | 2A-1 | 0.01 | Hexyltrimethoxysilane | 0.15 | 23.8/4.8/71.4 | 0. 142 | 79 ⊙ | 3.95 | × | 80 | ⊙ |

(1) value with respect to 100 parts by weight of positive electrode active material core material; (2) ratio when x + y+ z = 100; (3) proportion to coated positive electrode active material, "-" indicates "not blended" or "not evaluated".

The positive electrode produced in each of Examples 1A to 5A was disassembled and observed with a microscope, and as a result, peeling of the coating from the positive electrode active material core material did not occur at all.
The positive electrode produced in each of Examples 1B to 16B was disassembled and observed with a microscope, and as a result, cracking along the grain boundary of the positive electrode active material, irregularities and breakage in the current collector, and peeling of the positive electrode layer from the current collector did not occur at all.

INDUSTRIAL APPLICABILITY

The secondary battery according to the present invention can be used in various fields where power storage is assumed. Although it is merely an example, the secondary battery according to the present invention, in particular, the nonaqueous electrolyte secondary battery, may be used in the fields of electricity, information, and communication in which mobile devices and the like are used (for example, mobile equipment fields such as mobile phones, smart phones, smartwatches, notebook computers, digital cameras, activity meters, arm computers, and electronic papers), home and small industrial applications (for example, the fields of electric tools, golf carts, and home, nursing, and industrial robots), large industrial applications (for example, fields of forklift, elevator, and harbor crane), transportation system fields (for example, the field of hybrid vehicles, electric vehicles, buses, trains, power-assisted bicycles, and electric two-wheeled vehicles), power system applications (for example, fields of various kinds of power generation, road conditioners, smart grids, and household power storage systems), medical applications (medical equipment fields such as hearing aid earbuds), pharmaceutical applications (fields such as dosage management systems), IoT fields, space and deep sea applications (for example, the fields of a space probe and a research submersible), and the like.

DESCRIPTION OF REFERENCE SYMBOLS

1: Positive electrode active material core material
2: Organic-inorganic hybrid coating
10: Positive electrode active material

**Claims**

**1.** A positive electrode active material for a battery, comprising:

a positive electrode active material core material; and
a coating formed on a surface of the positive electrode active material core material,
wherein
the coating is an organic-inorganic hybrid coating formed of a reactant including at least:

a first metal alkoxide containing no metal atom-carbon atom bond in one molecule; and
a second metal alkoxide containing two or more metal atom-carbon atom bonds in one molecule.

**2.** The positive electrode active material according to claim 1, wherein the first metal alkoxide is a compound represented by general formula (1) shown below:
[Chemical Formula 1]

$$M^1(OR^1)_x \qquad (1)$$

wherein $M^1$ is Si, Ti, Al, or Zr;

x is a valence of $M^1$ and is an integer of 3 or 4;
$R^1$s each independently are an alkyl group having 1 to 10 carbon atoms or $-C(R^2)=CH-CO-R^3$, where $R^2$ is an alkyl group having 1 to 10 carbon atoms and $R^3$ is an alkyl group having 1 to 30 carbon atoms, an alkyloxy group having 1 to 30 carbon atoms, or an alkenyloxy group having 1 to 30 carbon atoms; and
two adjacent $R^1$s among the $R^1$s may be bonded to each other to form one ring together with an oxygen atom to which the two $R^1$s are bound and an $M^1$ atom to which the oxygen atom is bound when the two $R^1$s are the alkyl groups.

**3.** The positive electrode active material according to claim 1 or 2, wherein the second metal alkoxide is a compound having two or more Si atom-carbon atom bonds in one molecule.

**4.** The positive electrode active material according to any one of claims 1 to 3, wherein the second metal alkoxide is a compound represented by general formula (2A), (2B), (2C), (2D), (2E) or (2F) shown below, or a mixture of these compounds:
[Chemical Formula 2A]

$$(R^{211}O)_3Si\text{-}R^{31}\text{-}Si(OR^{212})_3 \qquad (2A)$$

wherein $R^{211}$s and $R^{212}$s each independently are an alkyl group having 1 to 10 carbon atoms; and $R^{31}$ is a divalent hydrocarbon group having 1 to 20 carbon atoms,

[Chemical Formula 2B]

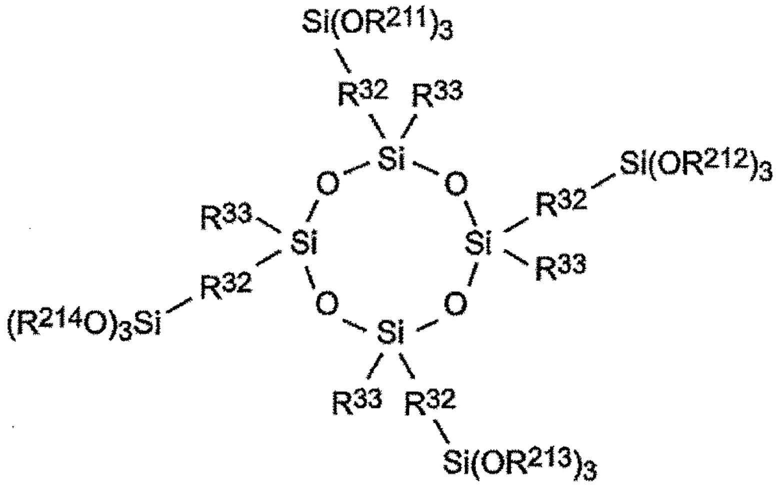

(2B)

wherein $R^{211}$s, $R^{212}$s, $R^{213}$s, and $R^{214}$s each independently are an alkyl group having 1 to 10 carbon atoms;

$R^{32}$s each independently are a divalent hydrocarbon group having 1 to 20 carbon atoms; and $R^{33}$s each independently are a monovalent hydrocarbon group having 1 to 10 carbon atoms,
[Chemical Formula 2C]

$$(R^{211}O)_3Si\text{-}R^{34}\text{-}NH\text{-}R^{35}\text{-}NH\text{-}R^{36}\text{-}Si(OR^{212})_3 \qquad (2C)$$

wherein $R^{211}$s and $R^{212}$s each independently are an alkyl group having 1 to 10 carbon atoms; and $R^{34}$, $R^{35}$, and $R^{36}$ each independently are a divalent hydrocarbon group having 1 to 10 carbon atoms,
[Chemical Formula 2D]

$$(R^{211})_2\text{-}Si(OR^{212})_2 \qquad (2D)$$

wherein $R^{211}$s and $R^{212}$s each independently are an alkyl group having 1 to 10 carbon atoms,

[Chemical Formula 2E]

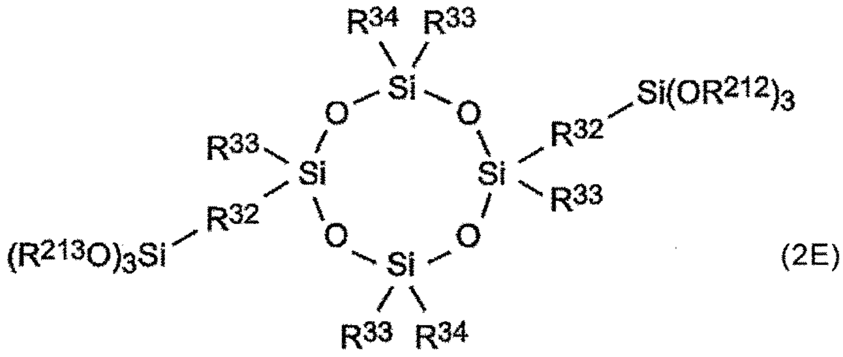

(2E)

wherein $R^{212}$s and $R^{213}$s each independently are an alkyl group having 1 to 10 carbon atoms;
$R^{32}$s each independently are a divalent hydrocarbon group having 1 to 20 carbon atoms;
$R^{33}$s each independently are a monovalent hydrocarbon group having 1 to 10 carbon atoms; and
$R^{34}$s each independently are a monovalent hydrocarbon group having 8 to 30 carbon atoms,

[Chemical Formula 2F]

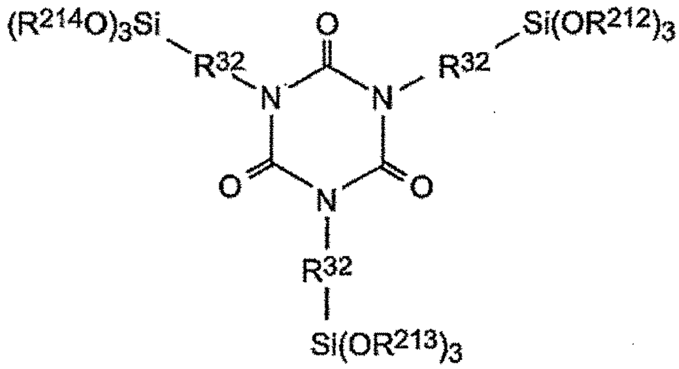

(2F)

wherein $R^{212}$s, $R^{213}$s and $R^{214}$s each independently are an alkyl group having 1 to 10 carbon atoms; and
$R^{32}$s each independently are a divalent hydrocarbon group having 1 to 20 carbon atoms.

**5.** The positive electrode active material according to any one of claims 1 to 4, wherein the coating contains 5 wt% or more and 85 wt% or less of the first metal alkoxide and 1 wt% or more and 85 wt% or less of the second metal alkoxide with respect to a total weight of the coating.

**6.** The positive electrode active material according to any one of claims 1 to 5, wherein the coating is an organic-inorganic hybrid coating formed of a reactant further including a third metal alkoxide containing one metal atom-carbon atom bond in one molecule.

**7.** The positive electrode active material according to claim 6, wherein the third metal alkoxide is a compound represented by general formula (3) shown below:
[Chemical Formula 3]

$$R^{12}\text{-Si}(OR^{11})_3 \qquad (3)$$

wherein $R^{11}$s each independently are an alkyl group having 1 to 10 carbon atoms; and
$R^{12}$ is a monovalent hydrocarbon group having 8 to 30 carbon atoms.

**8.** The positive electrode active material according to claim 6 or 7, wherein the coating contains 5 wt% or more and 85 wt% or less of the first metal alkoxide, 1 wt% or more and 85 wt% or less of the second metal alkoxide, and 5

wt% or more and 90 wt% or less of the third metal alkoxide with respect to the total weight of the coating.

**9.** The positive electrode active material according to any one of claims 1 to 8, wherein a content of the coating is 0.010 wt% or more and 2.000 wt% or less with respect to a total weight of the positive electrode active material.

**10.** The positive electrode active material according to any one of claims 1 to 9, wherein the positive electrode active material core material contains at least Li.

**11.** The positive electrode active material according to any one of claims 1 to 10, wherein the positive electrode active material core material is a lithium transition metal composite oxide.

**12.** The positive electrode active material according to any one of claims 1 to 11, wherein the battery is a lithium ion secondary battery.

**13.** A positive electrode comprising:

a positive electrode layer containing the positive electrode active material according to any one of claims 1 to 12; and
a positive electrode current collector.

**14.** A secondary battery, wherein the positive electrode according to claim 13, a negative electrode, a separator disposed between the positive electrode and the negative electrode, and an electrolyte are enclosed in an exterior body.

**15.** The secondary battery according to claim 14, wherein the electrolyte is a nonaqueous electrolyte.

**16.** The secondary battery according to claim 14 or 15, wherein the positive electrode and the negative electrode are electrodes capable of occluding and releasing lithium ions.

**17.** A method for producing the positive electrode active material according to any one of claims 1 to 5 and 9 to 12, the method comprising stirring the positive electrode active material core material together with the first metal alkoxide and the second metal alkoxide in an alkaline solvent.

**18.** The method for producing a positive electrode active material according to claim 17, the method comprising using a third metal alkoxide containing one metal atom-carbon atom bond in one molecule together with the first metal alkoxide and the second metal alkoxide.

FIG. 1

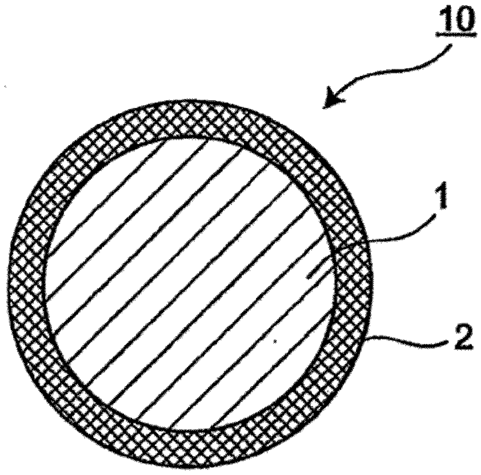


FIG. 2

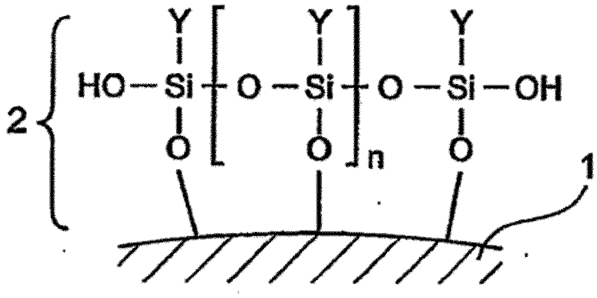

FIG. 3

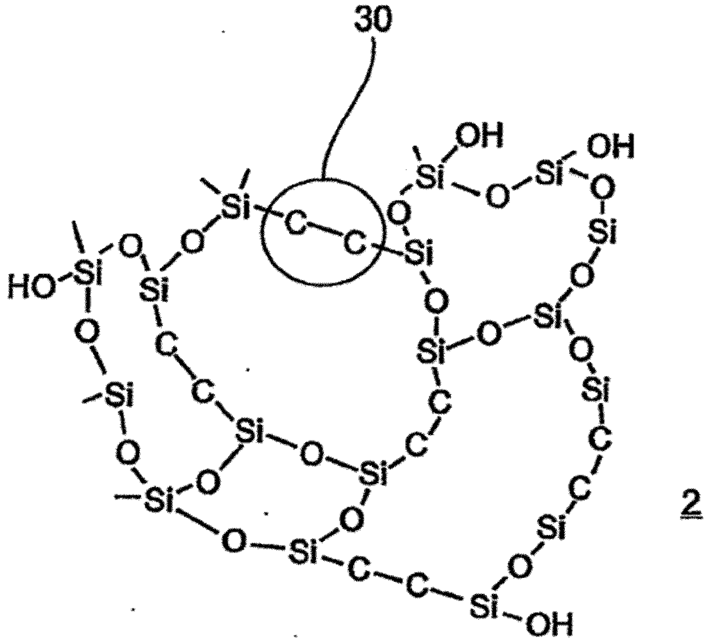


BTESE

FIG. 4

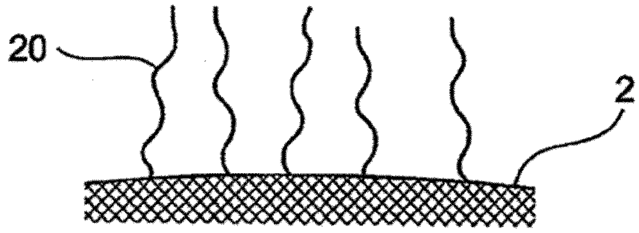

FIG. 5

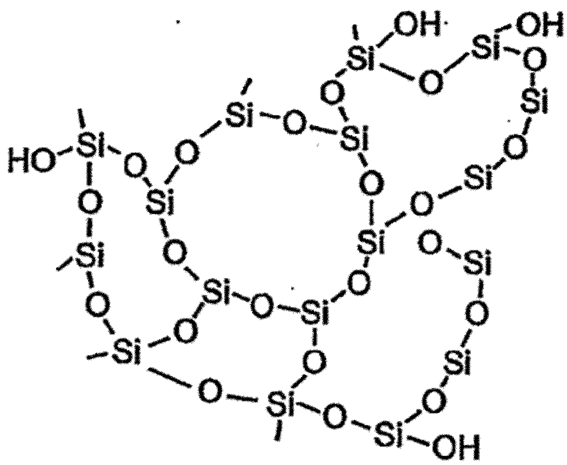

TEOS

## INTERNATIONAL SEARCH REPORT

International application No.
PCT/JP2020/030072

A. CLASSIFICATION OF SUBJECT MATTER
H01M 4/36(2006.01)i
FI: H01M4/36 C
According to International Patent Classification (IPC) or to both national classification and IPC

B. FIELDS SEARCHED
Minimum documentation searched (classification system followed by classification symbols)
H01M4/36

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-279991 A (SAMSUNG SDI CO., LTD.) 27 September 2002 (2002-09-27) | 1-18 |
| A | JP 2018-147726 A (TOYOTA MOTOR CORP.) 20 September 2018 (2018-09-20) | 1-18 |
| A | JP 2018-120705 A (SAMSUNG ELECTRONICS CO., LTD.) 02 August 2018 (2018-08-02) | 1-18 |
| A | US 2018/0323435 A1 (HYUNDAI MOTOR COMPANY) 08 November 2018 (2018-11-08) | 1-18 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 October 2020 (20.10.2020) | 02 November 2020 (02.11.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/030072

| Patent Documents referred in the Report | Publication Date | Patent Family | Publication Date |
|---|---|---|---|
| JP 2002-279991 A | 27 Sep. 2002 | US 2002/0142224 A1<br>CN 1366363 A<br>KR 10-2002-0062012 A | |
| JP 2018-147726 A | 20 Sep. 2018 | US 2018/0254477 A1<br>CN 108539139 A | |
| JP 2018-120705 A | 02 Aug. 2018 | US 2018/0212233 A1<br>KR 10-2018-0087102 A | |
| US 2018/0323435 A1 | 08 Nov. 2018 | CN 108878798 A<br>KR 10-2018-0123369 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012199101 A
- JP 2012169249 A
- JP 2011049161 A
- JP 2013191539 A